Europäisches Patentamt

European Patent Office

Office européen des brevets

(19)

(11) Veröffentlichungsnummer: **0 239 661**
**B1**

(12) **EUROPÄISCHE PATENTSCHRIFT**

(45) Veröffentlichungstag der Patentschrift:
01.03.89

(51) Int. Cl.⁴: **H 04 N 9/64,** H 04 N 5/46

(21) Anmeldenummer: 86104519.3

(22) Anmeldetag: 02.04.86

(54) Bildempfangsanlage zum Empfang von Videobildern.

(43) Veröffentlichungstag der Anmeldung:
07.10.87 Patentblatt 87/41

(45) Bekanntmachung des Hinweises auf die Patenterteilung:
01.03.89 Patentblatt 89/9

(84) Benannte Vertragsstaaten:
AT BE CH DE FR GB IT LI LU NL SE

(56) Entgegenhaltungen:
DE-C- 3 202 094

FERNSEH & KINO TECHNIK, Band 39, Nr. 5, Mai 1985, Seiten 235-244, Berlin, DE; J. DEUTRICH: "Schaltungstechnik und Bauelemente für hochauflösende Bildschirmsichtgeräte"

(73) Patentinhaber: **Furrer, Frank J., Dr., Ringstrasse 15, CH-8953 Birmensdorf (CH)**

(72) Erfinder: **Furrer, Frank J. Dr., Ringstrasse 15, CH-8953 Birmensdorf (CH)**
Erfinder: **Gloor, Walter, Roosmatten 15, CH-8967 Widen (CH)**

(74) Vertreter: **Steudtner, Werner, Dipl.-Ing., Lindenhof 5, CH-8604 Hegnau bei Zürich (CH)**

## Beschreibung

Die Erfindung bezieht sich auf eine Bildempfangsanlage zum Empfang von Video-Bildern, die von N verschiedenen Signalquellen mit mindestens zum Teil unterschiedlichen Signalparametern aus der die Parameter „Folgefrequenz $f_B$ von den Bildwechsel steuernden Synchronisationssignalen", „Dauer $\Delta T_B$ des Zeitintervalls zwischen zwei aufeinanderfolgenden Bildern", „Folgefrequenz $f_Z$ von den Bildzeilenwechsel steuernden Synchronisationssignalen", „Dauer $\Delta T_Z$ des Zeitintervalls zwischen zwei aufeinanderfolgenden Bildzeilen", „Folgefrequenz $f_P$ von die einzelnen Bildpunkte steuernden Bildpunktsignalen", „Dauer $\Delta T_P$ des Zeitintervalls zwischen zwei aufeinanderfolgenden Bildpunktsignalen", „Bildschreibweise in bezug auf die Aufeinanderfolge der zur Darstellung eines Gesamtbildes dienenden z Bildzeilen in Form von k jeweils aus den $(k \cdot n + m)$-ten Bildzeilen des Gesamtbildes mit

$$n = 1, 2, \ldots \left(\frac{z}{k} - 1\right) \text{ und } m = 1, 2, \ldots k \text{ und } k \text{ eine}$$

natürliche Zahl zusammengesetzten Bildern", „Bildpunktschreibweise in bezug auf die Signalisierung der Bildpunktintensität in Analog- oder Digitalform" umfassenden Parametergruppe stammen, mit mindestens einem Monitor, der eine mit ersten Ablenkmitteln zur Strahlablenkung in Zeilenrichtung, zweiten Ablenkmitteln zur Strahlablenkung senkrecht zur Zeilenrichtung, Fokussiermitteln zur Strahlfokussierung und Mitteln zur Strahlintensitätssteuerung versehene Bildröhre mit im wesentlichen rechteckigem oder quadratischem Bildfeld, einen ersten Generator zur Erzeugung einer ersten Steuergrösse für die Strahlablenkung in Zeilenrichtung, einen zweiten Generator zur Erzeugung einer zweiten Steuergrösse für die Strahlablenkung senkrecht zur Zeilenrichtung, einen dritten Generator zur Erzeugung einer dritten Steuergrösse für die Strahlfokussierung, Verstärkungsmittel für mindestens einen Teil der Steuergrössen sowie von Signalen gesteuerte Rücksetzmittel zur Rücksetzung von mindestens einem der beiden, zur Erzeugung von Steuergrössen für die Strahlablenkung dienenden Generatoren umfasst, und ferner mit Signalverarbeitungsmitteln zur Gewinnung der Synchronisationssignale sowie zur Gewinnung von mindestens einer vierten Steuergrösse für die Strahlintensitätssteuerung aus den den Signalverarbeitungsmitteln zugeführten, von einer der N Signalquellen stammenden Signalen.

Bildempfangsanlagen dieser Art sind bekannt. Sie werden hauptsächlich in grossen Informationszentralen wie z.B. Nachrichtenagenturen, Börsen, Devisenabteilungen von Banken usw., die mit einer Vielzahl von anderen grossen Informationszentralen in der ganzen Welt in Verbindung stehen, benutzt. Solche Informationszentralen haben in der Regel eine grössere Anzahl von Arbeitsplätzen für ihre Mitarbeiter und müssen für jeden Arbeitsplatz die Möglichkeit des Empfangs von Informationen aus aller Welt oder genauer gesagt die Möglichkeit des Empfangs der Informationen von allen Informationsquellen, mit denen die Informationszentrale in Verbindung steht bzw. in Verbindung treten kann, schaffen. Das geschah früher mit Hilfe von Fernschreibanlagen und Telefonen, von denen im Prinzip nur jeweils ein Gerät pro Arbeitsplatz erforderlich war, weil Fernschreib- und Telefonsysteme hinsichtlich der Signalübertragung in der ganzen Welt vereinheitlicht sind, d.h. Fernschreibsignale werden mit einem in der ganzen Welt einheitlichen Code und Telefongespräche in der Niederfrequenzebene mit einem in der ganzen Welt einheitlichen Frequenzband von 0,3 bjs 3,4 kHz übertragen, so dass praktisch zwischen allen Fernschreibgeräten in der ganzen Welt und auch zwischen allen Telefonapparaten in der ganzen Welt Verbindungen hergestellt werden können.

In den letzten Jahrzehnten ist man jedoch mehr und mehr dazu übergegangen, Informationen mit Hilfe von Video-Bildern als Informationsträger zu übertragen, weil die Übertragung grösserer Informationsmengen mit Hilfe von Video-Bildern wesentlich schneller als mit Fernschreiber oder per Telefon geht. (Man benötigt beispielsweise bei 10 Textzeilen und 50 Zeichen pro Zeile selbst bei einer Schreibgeschwindigkeit von 500 Anschlägen pro Minute mit dem Fernschreiber mindestens eine Minute und bei Telefonübertragung zum Ablesen der 10 Textzeilen etwa die gleiche Zeit, während man mit Hilfe von Video-Bildern im Prinzip innerhalb der Zeitdauer eines Bildwechsels, also innerhalb von weniger als 50 Millisekunden, ca. 5000 Zeichen bzw. ca. 100 Textzeilen à 50 Zeichen übertragen könnte und damit gegenüber einer Fernschreib- oder Telefonübertragung eine mehr als 10 000fache Übertragungsgeschwindigkeit erreichen kann.) Die Möglichkeit der Informationsübertragung mit Hilfe von Video-Bildern zwischen Informationszentralen in der ganzen Welt hatte sich eröffnet, nachdem durch geostationäre Nachrichtensatelliten die interkontinentale Übertragung von Video-Bildern zu tragbaren Übertragungskosten möglich geworden war. Prinzipiell wäre die interkontinentale Informationsübertragung mit Hilfe von Video-Bildern auch schon vorher möglich gewesen, z.B. über Seekabel und umlaufende Nachrichtensatelliten, aber die Übertragungskosten auf diesen Übertragungswegen waren im Vergleich zu den Übertragungskosten bei den herkömmlichen Systemen wie Fernschreiber und Telefon noch viel zu hoch, als dass sich eine weltumspannende Informationsübertragung mit Hilfe von Video-Bildern allgemein hätte durchsetzen können, und ausserdem standen auf diesen Übertragungswegen auch nicht genügend Kanäle für die Einführung eines allgemeinen weltumspannenden Informationsaustausches mit Hilfe von Video-Bildern anstelle von Fernschreiber und Telefon zur Verfügung. Vor der Errichtung der ersten geostationären Nachrichtensatelliten vor ca. zehn Jahren war der Informationsaustausch mit Hilfe von Video-Bildern daher auf kontinentale Massstäbe beschränkt und spielte aus diesem Grunde auch nur eine untergeordnete Rolle, weil man für den interkontinentalen Informationsaustausch ja immer noch praktisch ausschliesslich auf Fernschreiber und Telefon angewiesen war und über diese bereits vorhandenen Systeme daher nach wie vor auch den gesamten oder zumindest den grössten Teil des kontinentalen Informationsaustausches abwickelte. Diese zunächst untergeordnete Rolle des Informationsaustausches mit Hilfe von Video-Bildern führte dazu, dass man sich für diesen Informationsaustausch mit Hilfe von Video-Bildern anfangs schon aus Kostengründen auf bereits vorhandene Systeme abstützen musste, d.h. man benutzte zur Übertragung anfangs meist Fernsehreservekanäle und als Monitoren gewöhnliche Fernsehrgeräte, so dass wegen der Verschiedenheit der Fernsehsysteme in den verschiedenen Kontinenten und Ländern von Anfang an kein für die ganze Welt einheitliches System für die Informationsübertragung mit Hilfe von Video-Bildern entstehen konnte. Die durch diese Uneinheitlichkeit der Systeme mit Beginn der interkontinentalen Informationsübertragung mit Hilfe von Video-Bildern auftretenden Probleme liessen sich jedoch insofern noch relativ einfach lösen, als man in den Informationszentralen ohnehin drei Monitoren für jeden Arbeitsplatz vorgesehen hatte und so für jedes der drei Farb-Video-Übertragungssysteme NTSC (USA, Kanada, Japan), PAL (Europa) und SECAM (Frankreich und Ostblock) einen zum Empfang von Signalen des betreffenden Systems eingerichteten Monitor installieren konnte. Diese relativ einfache Lösung des Einheitlichkeitsproblems zu Beginn der interkontinentalen Informationsübertragung mit Hilfe von Video-Bildern hatte jedoch den entscheidenden Nachteil, dass der Zwang zur Vereinheitlichung in diesem frühen Stadium der weltumspannenden Video-Informationsübertragung fehlte und die etwa im gleichen Zeitraum beginnende Einführung der Computertechnik in diesen Zweig der Übertragungstechnik ohne im voraus festgelegte Normen vor sich ging. Un da jeder Computerhersteller sein eigenes Video-System für die Darstellung der von seinen Computern ausgegebenen Daten entwickelt hatte, wuchs die Vielfalt der Video-Systeme sehr bald von den ursprünglich drei vom Frensehen abgeleiteten Systemen auf eine grosse Anzahl von verschiedenen Systemen an, von denen sich jedes durch ein oder mehrere Parameter der eingangs genannten Parametergruppe und/oder andere besondere Merkmale des Systems von jedem anderen System dieser grossen Anzahl verschiedener Systeme unterschied. Natürlich bemühte man sich auch hier, zu einer Normierung der Systeme zu gelangen, aber diese Bemühungen konnten schon deswegen nicht zu einem durchschlagenden Erfolg führen, weil sie erstens nicht rechtzeitig genug erfolgten bzw. abgeschlossen werden konnten und zweitens auch die Computerindustrie und von dieser wiederum insbesondere die grossen Computerhersteller aus kommerziellen Gründen an einer weitgehenden Normierung der Video-Systeme und damit letztlich der gesamten Systeme nicht interessiert waren. Die Normierung beschränkte sich daher weitgehend auf die Übertragbarkeit der Daten über die vorhandenen Kanäle und insbesondere auch die geostationären Nachrichtensatelliten, während die Verschiedenheit der Video-Systeme, z.B. in bezug auf das Bildformat, die Anzahl der Bildpunkte pro Bild, die Anzahl der Bildzeilen pro Bild und die Anzahl der Bildpunkte pro Bildzeile sowie eine Reihe weiterer Parameter blieb, und da sich die den Widerständen gegen eine weitgehende Normierung offenbar zugrundeliegende Wunschvorstellung, bei den Abnehmern von Datenverarbeitungsanlagen unter Hinweis auf die Inkompatibilität anderer Systeme ein einziges System durchsetzen zu können, – wie an sich vorauszusehen war – nicht bzw. auf jeden Fall bei weitem nicht 100%ig verwirklichen liess, standen die Informationszentralen binnen kurzem der Situation gegenüber, entweder die Zahl der „empfangbaren" Video-Systeme auf die gängigsten Systeme zu beschränken und auf den Empfang der Daten von mit anderen Video-Systemen arbeitenden Datenverarbeitungsanlagen bzw. Informationsquellen zu verzichten oder aber Empfangsmöglichkeiten für alle verschiedenen Video-Systeme zu schaffen und gleichzeitig auf die Bedingung zu verzichten, dass an jedem Arbeitsplatz die Möglichkeit des Empfangs der Informationen von allen Informationsquellen besteht, mit denen die Informationszentrale in Verbindung steht bzw. treten kann, weil die weitere Erfüllung dieser Bedingung eine der Anzahl der verschiedenen Video-Systeme entsprechende und damit viel zu grosse Anzahl von Monitoren an jedem Arbeitsplatz erfordert hätte. Zwar wäre in dieser Hinsicht noch eine Zwischenlösung mit einem seit einiger Zeit auf dem Markt befindlichen Monitor möglich gewesen, der sich selbsttätig an die gängigen Signalparameter wie die Bildpunktzahl pro Bildzeile und die Zeilenzahl pro Bild anpasst und daher für alle Video-Systeme geeignet zu sein schien, die sich ausschliesslich in den gängigen Signalparametern voneinander unterscheiden und keine besonderen systemeigenen Merkmale aufweisen, aber bei dieser Zwischenlösung hätte man erstens auf eine formatgetreue Bildwiedergabe verzichten müssen bzw. Verzerrungen des wiedergegebenen Bildes in horizontaler oder vertikaler Richtung in Kauf nehmen müssen, weil das Bildformat aus dem Videosignal nicht entnehmbar ist, und ausserdem hätte diese Zwischenlösung die erforderliche Anzahl von Monitoren an jedem Arbeitsplatz auch nicht genügend weit reduzieren können, weil eine ganze Reihe von Computerherstellern ihre Systeme aus den oben schon genannten Gründen so eingerichtet haben, dass die von ihren Computern ausgegebenen Daten nur mit ihrem eigenen Video-System bzw. mit den eigenen Monitoren und jedenfalls nicht mit universell verwendbaren Monitoren dargestellt bzw. wiedergegeben werden können. Mit der genannten Zwischenlösung hätte also der aus der stark angewachsenen Zahl von Video-Systemen für die Informationszentralen entstandene Nachteil, entweder auf die Verbindungsmöglichkeit mit einigen Informationsquellen oder auf die Verbindungsmöglichkeit jedes Arbeitsplatzes mit allen zur Verfügung stehenden Informationsquellen oder aber auf eine sinnvolle Begrenzung der Zahl von Monitoren an jedem Arbeitsplatz und zusätzlich teilweise auf eine formatgetreue Bildwiedergabe verzichten zu müssen, nicht behoben werden können, und daher wurde diese unbefriedigende Zwischenlösung auch nicht eingeführt, sondern man behalf sich damit, die wichtigsten Informationsquellen bzw. die diesen zugeordneten Video-Systeme an allen Arbeitsplätzen verfügbar zu machen und für die restlichen Video-Systeme grossformatige Monitoren vorzusehen und diese so anzuordnen, dass die darauf abgebildeten Informationen von allen Arbeitsplätzen aus erkennbar sind, aber dabei handelte es sich natürlich nur um eine Behelfslösung in Ermangelung einer echten Lösung des Problems, weil das Arbeiten mit nur von weitem erkennbaren Informationen ungleich schwieriger als mit unmittelbar am Arbeitsplatz zur Verfügung stehenden Informationen ist.

Die der Erfindung zugrundeliegende Aufgabe war daher, eine echte Lösung dieses Problemes zu finden und eine Bildempfangsanlage der eingangs genannten Art mit mindestens einem Monitor zu schaffen, der mit jedem der verschiedenen Video-Systeme kompatibel ist.

Erfindungsgemäss wird das bei einer Bildempfangsanlage der eingangs genannten Art dadurch erreicht, dass der Monitor durch den empfangenen Signalen bzw. der diese liefernden Signalquelle zugeordnete Stellgrössen, die mindestens zum Teil in der Bildempfangsanlage gespeichert oder in einer anderen Form zugriffsfähig fixiert sind, auf die Parameter der Signalquelle einstellbar ist und für jede der N Signalquellen mindestens die nicht aus den empfangenen Signalen ableitbaren Stellgrössen in der Bildempfangsanlage gespeichert oder in einer anderen Form zugriffsfähig fixiert sind.

Hauptvorteil der vorliegenden Bildempfangsanlage ist, dass jeder Monitor der Anlage momentan auf jede der N Signalquellen einstellbar ist und damit auch für die Informationsübertragung mit Hilfe von Video-Bildern erreicht worden ist, dass an jedem Arbeitsplatz einer Informationszentrale in gleicher Weise wie bei Fernschreiber und Telefon im Prinzip nur ein Monitor erforderlich ist. Weitere wesentliche Vorteile, die im folgenden noch näher erläutert sind, sind durch Weiterbildungen der vorliegenden Bildempfangsanlage erzielbar.

Eine besonders bevorzugte Ausbildungsform der vorliegenden Bildempfangsanlage zeichnet sich aus durch erste steuerbare Stellmittel zur Einstellung des ersten Generators vor dem ersten Bildpunkt jeder Bildzeile auf einen Anfangswert $a_1$ der ersten Steuergrösse, bei dem sich eine solche Strahlablenkung in Zeilenrichtung ergibt, dass der erste Bildpunkt jeder Bildzeile einen für die ersten Bildpunkte aller Bildzeilen jedes Gesamtbildes im wesentlichen gleichen ersten Abstand $A_1$ von einem benachbarten ersten, zur Zeilenrichtung im wesentlichen senkrechten Bildrand des Bildfeldes der Bildröhre hat, und ausserdem zur Einstellung des ersten Generators auf einen solchen mittleren zeitlichen Anstieg der ersten Steuergrösse von ihrem Anfangswert $a_1$ aus, dass die erste Steuergrösse innerhalb der Signalisierungsdauer $(1/f_Z - \Delta T_Z)$ einer Bildzeile einen Endwert $a_2$ erreicht, bei dem sich eine solche Strahlablenkung in Zeilenrichtung ergibt, dass der letzte Bildpunkt jeder Bildzeile einen für die letzten Bildpunkte aller Bildzeilen im wesentlichen gleichen zweiten Abstand $A_2$ von einem benachbarten zweiten, zur Zeilenrichtung im wesentlichen senkrechten Bildrand des Bildfeldes der Bildröhre hat, zweite steuerbare Stellmittel zur Einstellung des zweiten Generators mit jedem Gesamtbildwechsel auf einen Anfangswert $b_1$ der zweiten Steuergrösse, bei dem sich eine solche Strahlablenkung in zur Zeilenrichtung senkrechter Richtung ergibt, dass die erste Bildzeile jedes Gesamtbildes einen über die ganze Zeilenlänge im wesentlichen gleichbleibenden dritten Abstand $B_1$ von einem benachbarten ersten, im wesentlichen in Zeilenrichtung verlaufenden Bildrand des Bildfeldes der Bildröhre hat, sowie zur Einstellung des zweiten Generators mit jedem der $(k-1)$ Bildwechsel, die bei der Darstellung von Gesamtbildern in Form von k jeweils aus den $(k \cdot n + m)$-ten Zeilen des Gesamtbildes zusammengesetzten Bildern bei $k \neq 1$ während der Darstellung eines jeden Gesamtbildes auftreten, auf einen Anfangswert

$$\left( b_1 + \frac{(m-1) \cdot (b_2 - b_1)}{f_Z(1/f_B - \Delta T_B) - 1} \right)$$

der zweiten Steuergrösse, und ausserdem zur Einstellung des zweiten Generators auf eine Stufenzahl

$$\frac{f_Z}{k} \cdot (1/f_B - \Delta T_B - k/f_Z)$$

pro Bild, eine Stufenhöhe

$$\frac{k \cdot (b_2 - b_1)}{f_Z(1/f_B - \Delta T_B) - 1}$$

und eine Stufenbreite bzw. -dauer $1/f_Z$ einer in Zeitabständen $T_Z = 1/f_Z$ stufenweise ansteigenden zweiten Steuergrösse bzw. auf einen solchen mittleren zeitlichen Anstieg der zweiten Steuergrösse von ihrem Anfangswert

$$\left( b_1 + \frac{(m-1) \cdot (b_2 - b_1)}{f_Z(1/f_B - \Delta T_B) - 1} \right)$$

aus, dass die zweite Steuergrösse innerhalb der Signalisierungsdauer

$$\frac{1}{k} \cdot (1/f_B - \Delta T_B)$$

eines Bildes einen Endwert

$$\left( b_2 - \frac{(k-m) \cdot (b_2 - b_1)}{f_Z(1/f_B - \Delta T_B) - 1} \right)$$

und somit am Ende der Abbildung eines Gesamtbildes mit $m = k$ einen Endwert $b_2$ erreicht, bei dem sich eine solche Strahlablenkung in zur Zeilenrichtung senkrechter Richtung ergibt, dass die letzte Bildzeile jedes Gesamtbildes einen über die ganze Zeilenlänge im wesentlichen gleichbleiben-

den vierten Abstand $B_2$ von einem benachbarten zweiten, im wesentlichen in Zeilenrichtung verlaufenden Bildrand des Bildfeldes der Bildröhre hat, dritte steuerbare Stellmittel zur Einstellung des dritten Generators auf einen Wert der dritten Steuergrösse, bei dem sich eine solche Strahlfokussierung ergibt, dass der Durchmesser eines von dem fokussierten Strahl im Bereich der Bildmitte des Bildfeldes der Bildröhre erzeugten, einen Bildpunkt repräsentierenden Leuchtfleckes bei einer Länge A der im wesentlichen in Zeilenrichtung verlaufenden beiden Bildränder des Bildfeldes der Bildröhre und einer Länge B der im wesentlichen senkrecht zur Zeilenrichtung verlaufenden beiden Bildränder des Bildfeldes der Bildröhre innerhalb eines Durchmesserbereiches liegt, dessen untere Grenze durch den tiefsten und dessen obere Grenze durch den höchsten Wert der beiden Wertebereiche

$$0,9 \cdot \frac{A - A_1 - A_2}{f_P (1/f_Z - \Delta T_Z)} \pm 45\% \text{ und}$$

$$0,9 \cdot \frac{B - B_1 - B_2}{f_Z (1/f_B - \Delta T_B)} \pm 45\%$$

bestimmt ist, und Steuermittel zu einer solchen Steuerung der ersten und zweiten Stellmittel, dass das Verhältnis $(A - A_1 - A_2)/(B - B_1 - B_2)$ der Länge $(A - A_1 - A_2)$ der im wesentlichen in Zeilenrichtung verlaufenden beiden Bildränder des zur Abbildung benutzten Teiles des Bildfeldes der Bildröhre zur Länge $(B - B_1 - B_2)$ der im wesentlichen senkrecht zur Zeilenrichtung verlaufenden beiden Bildränder des zur Abbildung benutzten Teiles des Bildfeldes der Bildröhre im wesentlichen gleich dem Seitenverhältnis der Länge der im wesentlichen in Zeilenrichtung verlaufenden beiden Seiten zur Länge der im wesentlichen senkrecht zur Zeilenrichtung verlaufenden beiden Seiten des den empfangenen Signalen bzw. dem dieselben liefernden Signalgeber zugeordneten Bildformats ist, sowie zu einer solchen Steuerung der dritten Stellmittel, dass sich ein Bildpunktdurchmesser innerhalb des genannten Durchmesserbereiches ergibt, wobei die Steuermittel Mittel zur Bereitstellung von Stellgrössen, die in einem vorbestimmten Zusammenhang mit den Signalparametern der empfangenen Signale bzw. den Parametern des diese liefernden Signalgebers stehen und den Stellmitteln zur Steuerung zugeführt werden, sowie Mittel zur Zuführung der Stellgrössen zu den zugeordneten Stellmitteln umfassen. Mit besonderem Vorteil können bei dieser besonders bevorzugten Ausbildungsform der vorliegenden Bildempfangsanlage die ersten Stellmittel je ein steuerbares Stellorgan zur Einstellung des ersten Generators auf den Anfangswert $a_1$ und auf den Endwert $a_2$ der ersten Steuergrösse und die zweiten Stellmittel je ein steuerbares Stellorgan zur Einstellung des zweiten Generators auf den Anfangswert $b_1$ und auf den Endwert $b_2$ der zweiten Steuergrösse umfassen. Anstelle der Definition der Zeitfunktionen der ersten und zweiten Steuergrösse durch Anfangs- und Endpunkt der Funktion können natürlich auch andere Definitionen wie z.B. die Definition dieser Zeitfunktionen durch nur einen Funktionswert und die Steigung der Funktion benutzt und die beiden Generatoren mit den zugeordneten Stellmitteln entsprechend ausgebildet werden, aber bei der Definition durch Anfangs- und Endpunkt der Funktion ist der erforderliche technische Aufwand für die beiden Generatoren mit den zugeordneten Stellmitteln in der Regel am geringsten.

Die Mittel zur Bereitstellung von Stellgrössen können bei der vorliegenden Bildempfangsanlage zweckmässig Speichermittel zur Speicherung von wenigstens einem Teil der den N verschiedenen Signalquellen zugeordneten Stellgrössen und die Mittel zur Zuführung der Stellgrössen zu den zugeordneten Stellmitteln Wahlmittel zur Auswahl der den zu empfangenden Signalen bzw. der diese liefernden Signalquelle zugeordneten Stellgrössen aus den in den Speichermitteln gespeicherten Stellgrössen sowie Mittel zur Zuordnung und Zuleitung der der ausgewählten Signalquelle zugeordneten Stellgrössen von den Speichermitteln zu den einzelnen zugeordneten Stellmitteln umfassen. Der Vorteil der Verwendung von Speichermitteln zur Speicherung der Stellgrössen liegt in erster Linie darin, dass man genügend Leerraum im Speicher vorsehen kann, um auch für jedes neue Video-System die entsprechenden Stellgrössen in den Speicher einspeichern zu können, und sich auf diese Weise verhindern lässt, dass die Adaptionsfähigkeit der vorliegenden Bildempfangsanlage an alle Video-Systeme durch Einführung eines neuen Video-Systems durchkreuzt werden kann. Bei digitalem Aufbau der Speichermittel bedarf es zur Adaption der Bildempfangsanlage an ein neu eingeführtes Video-System nicht einmal einer schaltungstechnischen Änderung der Anlage, sondern nur der Einspeicherung eines weiteren Stellgrössensatzes bzw. eines Satzes der diese Stellgrössen repräsentierenden Zahlen auf freie Speicherplätze im Leerraum des Speichers, so dass sich die Einführung neuer Video-Systeme allein aus dem Grunde, um die Abnehmer auch zur Abnahme des zu dem neuen Video-System gehörenden Monitors zu zwingen, nicht mehr lohnt. Dieser Punkt hat besondere Bedeutung für eine im folgenden noch zu erörternde Ausbildung der vorliegenden Bildempfangsanlage, bei der die gesamte Bildempfangsanlage in einem Monitor integriert ist, weil sich damit natürlich ein für jedes beliebige Video-System einschliesslich derzeit noch nicht einmal konzipierter Systeme und damit tatsächlich universell verwendbarer Monitor ergibt, der seinerseits dazu beitragen könnte, dass sich die Computerindustrie anstelle der Schaffung von immer neuen, mit den Systemen anderer Hersteller möglichst inkompatiblen Systemen auf eine weitgehende Normierung der Systeme einigt und damit eine abnehmerfreundliche Kompatibilität der Systeme untereinander erreicht wird. Im Hinblick auf die Art der verwendeten Speichermittel ist jedoch noch darauf hinzuweisen, dass bei der vorliegenden Bildempfangsanlage ohne weiteres auch analoge Speichermittel wie z.B. schaltbare Widerstände in Verbindung mit einer Konstantstromquelle verwendet werden können, dass also der Begriff Speichermittel im vorliegenden Zusammenhang nicht im engen Sinne auf reine Speicher beschränkt ist, sondern alle Mittel umfasst, mit denen Zahlenwerte und/oder Werte von Analoggrössen zugriffsfähig fixierbar sind.

Ausser den Speichermitteln und den genannten Wahlmitteln können bei der vorliegenden Bildempfangsanlage vorteilhaft Videoschaltmittel zur Verbindung jedes Monitors der Anlage mit der für denselben jeweils ausgewählten Signalquelle und Betätigungsmittel zur Steuerung der Videoschaltmittel vorgesehen sein, und die Wahlmittel zur Auswahl der der jeweils ausgewählten Signalquelle zugeordneten Stellgrössen können zweckmässig von den Betätigungsmitteln oder den Videoschaltmitteln gesteuerte Zugriffsmittel zum Zugriff zu den dem jeweils ausgewählten Signalgeber zugeordneten, in den Speichermitteln gespeicherten Stellgrössen und zur Übergabe der durch den Zugriff erhaltenen Stellgrössen an die Mittel zur Zuordnung und Zuleitung der Stellgrössen zu den zugeordneten Stellmitteln umfassen. Bei einer Bildempfangsanlage mit einer Vielzahl von M Monitoren, bei der jeder Monitor über eine Verbindungsleitung zur Übertragung der Signale des ausgewählten Signalgebers mit einer örtlich von den Monitoren getrennt angeordneten Zentrale verbunden ist, können die Videoschaltmittel dabei vorteilhaft in der Zentrale angeordnet sein und zweckmässig einen Videoverteiler mit je einem Eingang für jeden der N Signalgeber und je einem Ausgang für jeden der M Monitoren sowie steuerbare Schaltmittel zum Anschluss jedes der M Ausgänge an jeweils einen der N Eingänge sowie zur Anschliessbarkeit desselben an jeden der (N−1) anderen Eingänge umfassen, wobei vorzugsweise mindestens an einem Teil der Monitorstandorte mit den Videoschaltmitteln in der Zentrale verbundene Betätigungsmittel zur Auswahl des die zu empfangenden Signale liefernden Signalgebers für mindestens einen, vorzugsweise für jeden Monitor an dem betreffenden Standort sowie zu einer entsprechenden Steuerung der steuerbaren Schaltmittel vorgesehen sein können. Eine solche zentrale Anordnung der Videoschaltmittel hat bekanntlich den Vorteil, dass zu jedem Monitor der Anlage nur jeweils ein Signalkanal und nicht alle N Kanäle geführt werden müssen, was insofern von Bedeutung ist, als die Bandbreite der zur Informationsübertragung mit Hilfe von Video-Bildern vorgesehenen Kanäle in der Grössenordnung von 100 MHz und darüber liegen kann und die Zuleitungen zu den einzelnen Monitoren daher entweder Grenzfrequenzen von mehreren GHz haben müssten (wobei zusätzlich noch ein bis in den GHz-Bereich reichender Frequenzumsetzer in jedem Monitor vorgesehen sein müsste) oder aber aus einem ganzen Bündel von N einzelnen Zuleitungen bestehen müssten, wenn die Videoschaltmittel nicht zentral angeordnet wären, sondern in jedem einzelnen Monitor Videoschaltmittel vorgesehen wären und demgemäss auch zu jedem Monitor alle N Kanäle geführt werden müssten. Bei zentraler Anordnung der Videoschaltmittel empfiehlt es sich schon aus Gründen des technischen Aufwandes natürlich auch, anstelle einer Anordnung von gesonderten Signalverarbeitungsmitteln für jeden der N Signalgeber in jedem der M Monitoren auch die Signalverarbeitungsmittel zentral anzuordnen, so dass anstelle von N·M Signalverarbeitungsmitteln nur noch N Signalverarbeitungsmittel für die Bildempfangsanlage benötigt werden. Mit besonderem Vorteil können daher die von den N Signalquellen stammenden Signale den Videoschaltmitteln über N voneinander getrennte Kanäle zugeführt werden, von denen jeder für die Signale von jeweils einer der N Signalquellen vorgesehen und mit Signalverarbeitungsmitteln zur Gewinnung der Synchronisationssignale sowie zur Gewinnung der vierten Steuergrössen, vorzugsweise von den drei Farben Rot, Grün und Blau zugeordneten drei vierten Steuergrössen, für die Strahlintensitätssteuerung aus den den Signalverarbeitungsmitteln zugeführten, von der dem betreffenden Kanal zugeordneten Signalquelle stammenden Signalen versehen ist. Aus den gleichen Gründen des technischen Aufwandes wie bei den Signalverarbeitungsmitteln empfiehlt es sich bei zentraler Anordnung der Videoschaltmittel ferner auch, anstelle einer Anordnung von Speichermitteln für die Stellgrössen in jedem der M Monitoren auch die Speichermittel zentral anzuordnen, so dass die Speichermittel für die Stellgrössen nur noch einfach und nicht M-fach benötigt werden. Mit Vorteil können daher die Speichermittel zur Speicherung der Stellgrössen ebenfalls in der Zentrale angeordnet und sämtliche den N verschiedenen Signalquellen zugeordneten Stellgrössen in den Speichermitteln gespeichert sein, wobei dann zweckmässig in jedem Monitor mit den Speichermitteln in der Zentrale verbundene Mittel zur Zuordnung und Zuleitung der der ausgewählten Signalquelle zugeordneten Stellgrössen zu den einzelnen zugeordneten Stellmitteln vorgesehen sind.

Generell ist es schon wegen der oben bereits erwähnten Adaptionsfähigkeit an neue Video-Systeme bei digitaler Speicherung der Stellgrössen von besonderem Vorteil, wenn die vorliegende Bildempfangsanlage so ausgebildet ist, dass die Stellmittel sowie die Mittel zur Bereitstellung von Stellgrössen und die Mittel zur Zuführung der Stellgrössen zu den zugeordneten Stellmitteln mindestens zum Teil aus digitalen Schaltungen bzw. Bauteilen aufgebaut sind und dass die Mittel zur Bereitstellung von Stellgrössen digitale Speichermittel zur Speicherung von sämtlichen, den N verschiedenen Signalquellen zugeordneten Stellgrössen in digitaler Form, vorzugsweise jeweils zusammen mit einer die Stellmittel, denen die Stellgrösse zuzuführen ist, angebenden Adresse, und die Mittel zur Zuordnung und Zuleitung der Stellgrössen von den Speichermitteln zu den einzelnen zugeordneten Stellmitteln vorzugsweise Adressdecodiermittel und separate Steuerleitungen zwischen denselben und den einzelnen Stellmitteln sowie eine die Adressdecodiermittel mit sämtlichen zugeordneten Stellmitteln verbindende gemeinsame Datenleitung umfassen, und dass die Generatoren zur Erzeugung der Steuergrössen digitale Schaltungen sowie Digital-Analogwandler zur Verarbeitung der den Stellmitteln zugeführten digitalen Stellgrössen umfassen.

Eine besonders vorteilhafte Weiterbildung der vorliegenden Bildempfangsanlage zeichnet sich durch Mittel zur Bereitstellung der Stellgrössen aus, die Mittel zur Ableitung von wenigstens einem Teil der Stellgrössen aus den jeweils empfangenen Signalen umfassen. Mit einer solchen Weiterbildung der vorliegenden Bildempfangsanlage ist es möglich, einen Monitor zu schaffen, der für jedes beliebige Video-System einschliesslich derzeit noch nicht einmal konzipierter Systeme verwendbar ist, und damit erstmalig zu einem wirklich universellen Monitor zu gelangen, der sich selbsttätig auf das Video-System bzw. auf die Parameter der Signalquelle einstellt, von der ihm über seinen Eingang Signale zugeführt werden. Ein solcher Monitor, in den dann die gesamte Bildempfangsanlage integriert ist, könnte an jede beliebige Datenverarbeitungsanlage einschliesslich der sogenannten „personal computers" anstelle des speziell für dieselbe vorgesehenen Monitors angeschlossen werden und wäre im Gegensatz zu dem speziell vorgesehenen Monitor in der Lage, auch die von anderen Datenverarbeitungssystemen mit unterschiedlichem Video-System kommenden Daten unmittelbar darzustellen. Die Einstellbarkeit dieses Monitors auch auf neue Video-Systeme könnte dabei, wie oben schon erwähnt, einfach durch Einspeicherung eines entsprechenden zusätzlichen Stellgrössensatzes erreicht werden. Das im Zusammenhang mit einer Ableitung der Stellgrössen aus den empfangenen Signalen auftretende Problem, dass ein Teil der Parameter der Signalquelle wie z.B. das Bildformat, die erwähnte Bildschreibweise und die erwähnte Bildpunktschreibweise aus den empfangenen Signalen nicht entnehmbar ist, kann dabei vorteilhaft dadurch gelöst werden, dass die Mittel zur Ableitung der Stellgrössen aus den jeweils empfangenen Signalen Mittel zur Erkennung der die empfangenen Signale liefernden Signalquelle oder des bei derselben benutzten Datenverarbeitungssystems aus den Signalparametern der empfangenen Signale und/oder anderen besonderen Merkmalen der empfangenen Signale und/oder speziellen für die die empfangenen Signale liefernde Signalquelle bzw. das bei derselben benutzte Datenverarbeitungssystem charakteristischen Kombinationen von Signalparametern und/oder anderen besonderen Merkmalen der empfangenen Signale sowie von diesen Erkennungsmitteln gesteuerte Mittel zur Erzeugung mindestens eines Teiles der Stellgrössen, die der die empfangenen Signale liefernden Signalquelle bzw. dem bei derselben benutzten Datenverarbeitungssystem zugeordnet sind, und/oder zur Entnahme mindestens eines Teiles dieser Stellgrössen aus Speichermitteln, in denen für jede der N verschiedenen Signalquellen die betreffenden zugeordneten Stellgrössen gespeichert sind, umfassen. In diesem Zusammenhang ist darauf hinzuweisen, dass natürlich auch die vorgenannten Mittel zur Erzeugung von Stellgrössen in irgendeiner Form auf fixierte Grössen zurückgreifen müssen, die man im übertragenen Sinne auch als gespeicherte Grössen bezeichnen könnte, nur handelt es sich bei dieser Form der „Speicherung" nicht um Speichermittel im eigentlichen Sinne, sondern um bestimmte Schaltungen und Schaltelemente, die diese fixierten Grössen liefern. Der technische Kniff bei der Lösung der Aufgabe, aus den empfangenen Signalen die Stellgrössen bzw. im übertragenen Sinne die Parameter der die empfangenen Signale liefernden Signalquelle abzuleiten, obwohl mindestens ein Teil dieser Parameter den empfangenen Signalen gar nicht entnehmbar ist, besteht jedenfalls darin, den empfangenen Signalen alle diejenigen Merkmale zu entnehmen, die ihnen entnehmbar sind, und aus der sich damit ergebenden Merkmalskombination die die empfangenen Signale liefernde Signalquelle bzw. das dort benutzte Datenverarbeitungssystem zu erkennen und dann die dieser Signalquelle bzw. dem bei dieser benutzten Datenverarbeitungssystem zugeordneten Stellgrössen im Sinne der vorliegenden Erfindung entweder direkt einem Speicher zu entnehmen oder aber, gegebenenfalls unter Zuhilfenahme von den empfangenen Signalen entnommenen Merkmalen bzw. Kenngrössen, aus gespeicherten oder in einer anderen Form zugriffsfähig fixierten Hilfsgrössen, die der die empfangenen Signale liefernden Signalquelle bzw. dem dort benutzten Datenverarbeitungssystem zugeordnet sind, zu errechnen bzw. mit einer Rechenschaltung zu bestimmen. Diesem technischen Kniff liegt die Erfahrung zugrunde, dass von unterschiedlichen und insbesondere von nicht miteinander kompatiblen Datenverarbeitungsanlagen abgegebene Video-Signale sich alle, wenn auch teilweise nur in Kleinigkeiten, voneinander unterscheiden und daher auch der Datenverarbeitungsanlage, von der sie stammen, zugeordnet werden können, und mit dieser Erkennbarkeit des Datenverarbeitungssystems aus den empfangenen Signalen ergibt sich unter Anwendng der vorliegenden Erfindung die Einstellbarkeit auf die aus den empfangenen Signalen selbst gar nicht entnehmbaren Parameter des Datenverarbeitungssystems.

Da die Verbindung von Bildempfangsanlagen der eingangs genannten Art mit den die empfangenen Signale liefernden Signalquellen in der Regel über ein die Signale der verschiedenen Signalquellen auf verschiedenen Kanälen übertragendes gemeinsames Kabel erfolgt, weist die vorliegende Bildempfangsanlage vorzugsweise ferner noch einen gemeinsamen Eingang zum Anschluss eines die Signale der N verschiedenen Signalquellen auf N verschiedenen Kanälen übetragenden Kabels und Mittel zur Trennung der Kanäle voneinander auf. An die Ausgänge der Kanaltrennungsmittel wären dann bei der obenerwähnten Ausbildungsform der vorliegenden Bildempfangsanlage mit zentral angeordneten Videoschaltmitteln und ebenfalls zentral angeordneten Signalverarbeitungsmitteln die Eingänge der einzelnen, dem betreffenden Kanal zugeordneten Signalverarbeitungsmittel und an die Ausgänge dieser Signalverarbeitungsmittel die Eingänge der Videoschaltmittel bzw. des genannten Videoverteilers anzuschliessen.

Vorteilhaft ist schliesslich bei der vorliegenden Bildempfangsanlage die Verwendung von Stellgrössen für die ersten Stellmittel, bei denen sich bei einem dem Mittelwert $\frac{1}{2}(a_1 + a_2)$ aus Anfangs- und Endwert der ersten Steuergrösse entsprechenden Wert der ersten Steuergrösse keine Strahlablenkung in Zeilenrichtung ergibt, und/oder von Stellgrössen für die zweiten Stellmittel, bei denen sich bei einem dem Mittelwert $\frac{1}{2}(b_1 + b_2)$ aus Anfangs- und Endwert der zweiten Steuergrösse entsprechenden Wert der zweiten Steuergrösse keine Strahlablenkung in zur Zeilenrichtung senkrechter Richtung ergibt. Der Vorteil einer Verwendung solcher Stellgrössen ist, dass die Bildränder des zur Abbildung benutzten Teiles des Bildfeldes der Bildröhre in horizontaler und/oder vertikaler Richtung gleiche Abstände von den benachbarten Bildrändern des Bildfeldes der Bildröhre haben bzw. dass die von den Schnittpunkten der Diagonalen gebildeten Mittelpunkte des Bildfeldes der Bildröhre und des zur Abbildung benutzten Teiles desselben zusammenfallen und sich der zur Abbildung benutzte Teil des Bildfeldes der Bildröhre somit gewissermassen in der Mitte des Bildfeldes der Bildröhre befindet.

Von Vorteil sind ferner Stellgrössen für die ersten und zweiten Stellmittel, bei denen entweder die Abstände $A_1$ und $A_2$ zwischen den senkrecht zur Zeilenrichtung verlaufenden beiden Bildrändern des zur Abbildung benutzten Teiles des Bildfeldes der Bildröhre und den senkrecht zur Zeilenrichtung verlaufenden beiden Bildrändern des Bildfeldes der Bildröhre oder die Abstände $B_1$ und $B_2$ zwischen den in Zeilenrichtung verlaufenden beiden Bildrändern des zur Abbildung benutzten Teiles des Bildfeldes der Bildröhre und den in Zeilenrichtung verlaufenden beiden Bildrändern des Bildfeldes der Bildröhre oder sowohl die Abstände $A_1$ und $A_2$ als auch die Abstände $B_1$ und $B_2$ gleich Null sind. Der Vorteil solcher Stellgrössen ist, dass sich damit die grösstmögliche Ausnutzung des Bildfeldes der Bildröhre bzw. die grösstmögliche Fläche für den zur Abbildung benutzten Teil des Bildfeldes der Bildröhre ergibt. Die vorstehende, von den Stellgrössen für die ersten und zweiten Stellmittel vorzugsweise zu erfüllende Bedingung kann im übrigen mit der zuvor genannten, zusammenfallende Mittelpunkte des Bildfeldes der Bildröhre und des zur Abbildung benutzten Teiles desselben ergebenden, von den Stellgrössen für die ersten und zweiten Stellmittel vorzugsweise zu erfüllenden Bedingung kombiniert werden.

Vorteilhaft sind schliesslich noch Stellgrössen für die dritten Stellmittel, bei denen sich ein bei

$$\frac{A - A_1 - A_2}{f_P(1/f_Z - \Delta T_Z)} \pm 20\%$$

vorzugsweise $\pm 10\%$, oder

$$\frac{B - B_1 - B_2}{f_Z(1/f_B - \Delta T_B)} \pm 20\%,$$

vorzugsweise $\pm 10\%$, liegender Durchmesser eines von dem fokussierten Strahl im Bereich der Bildmitte des Bildfeldes der Bildröhre erzeugten, einen Bildpunkt repräsentierenden Leuchtfleckes ergibt. Der Vorteil solcher Stellgrössen für die dritten Stellmittel ist eine weitgehende Ausleuchtung der für die einzelnen Bildpunkte vorgesehenen Flächen auf dem Bildfeld der Bildröhre und damit eine Darstellung von Informationen auf dem Bildfeld der Bildröhre, bei der die einzelnen Informationsteile wie z.B. Zeichen nicht aus einzelnen Bildpunkten zusammengesetzt, sondern geschlossen erscheinen.

Anhand der nachstehenden Figuren ist die Erfindung im folgenden an einem Ausführungsbeispiel näher erläutert. Es zeigen

Fig. 1 ein Blockschema eines Ausführungsbeispiels der vorliegenden Bildempfangsanlage;

Fig. 2 ein Blockschaltbild des zur Erzeugung der ersten Steuergrösse 8 für die Strahlablenkung in Zeilenrichtung dienenden ersten Generators 7 in der in Fig. 1 gezeigten Bildempfangsanlage;

Fig. 3 ein Blockschaltbild des zur Erzeugung der zweiten Steuergrösse 10 für die Strahlablenkung senkrecht zur Zeilenrichtung dienenden zweiten Generators 9 in der in Fig. 1 gezeigten Bildempfangsanlage;

Fig. 4 ein Blockschaltbild der zur Zuordnung und Zuleitung der Stellgrössen zu den ersten bis dritten Stellmitteln dienenden Adressdecodiereinrichtung 27 in der in Fig. 1 gezeigten Bildempfangsanlage.

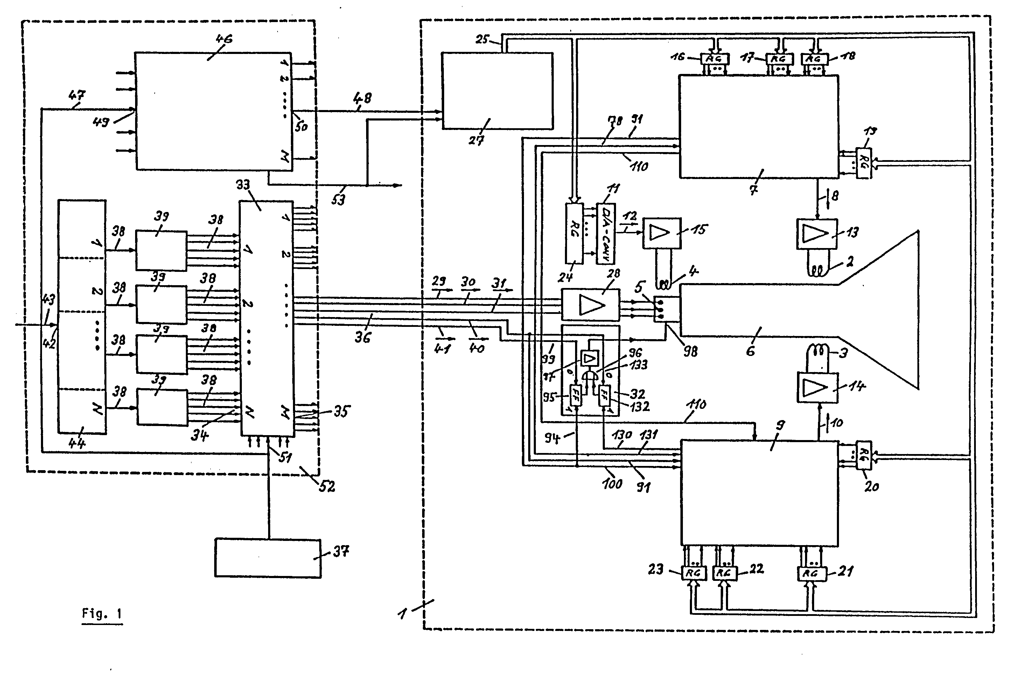

Das in Fig. 1 als Blockschema gezeigte Ausführungsbeispiel der vorliegenden Bildempfangsanlage umfasst M Monitoren 1 von untereinander gleichem Aufbau, von denen jeder eine mit ersten Ablenkmitteln 2 zur Strahlablenkung in Zeilenrichtung, zweiten Ablenkmitteln 3 zur Strahlablenkung senkrecht zur Zeilenrichtung, Fokussiermitteln 4 zur Strahlfokussierung und Mitteln 5 zur Strahlintensitätssteuerung versehene Bildröhre 6 mit im wesentlichen rechteckigem oder quadratischem Bildfeld, einen ersten Generator 7 zur Erzeugung einer ersten Steuergrösse 8 für die Strahlablenkung in Zeilenrichtung, einen zweiten Generator 9 zur Erzeugung einer zweiten Steuergrösse 10 für die Strahlablenkung senkrecht zur Zeilenrichtung, einen dritten Generator 11 zur Erzeugung einer dritten Steuergrösse 12 für die Strahlfokussierung, Verstärkungsmittel 13, 14 und 15 für jede der Steuergrössen 8, 10 und 12, erste steuerbare Stellmittel in Form der Register 16, 17, 18 und 19 zur Einstellung des ersten Generators 7 auf Anfangs- und Endwerte der ersten Steuergrösse 8, zweite steuerbare Stellmittel in Form der Register 20, 21, 22 und 23 zur Einstellung des zweiten Generators 9 auf Anfangs- und Endwerte der zweiten Steuergrösse 10 sowie gegebenenfalls bei der Darstellung von Gesamtbildern in Form von k jeweils aus den $(k \cdot n + m)$-ten Zeilen des Gesamtbildes zusammengesetzten Teilbildern auf die Teilbildzahl, dritte steuerbare Stellmittel in Form des Registers 24 zur Einstellung des dritten Generators 11 auf einen der erforderlichen Strahlfokussierung entsprechenden Wert der dritten Steuergrösse 12 und Steuermittel in Form der über eine gemeinsame Datenleitung 25 mit sämtlichen Registern 16 bis 24 und über separate Steuerleitungen 26 mit jedem einzelnen dieser Register verbundenen Adressdecodiermittel 27 zur Steuerung der von den Registern 16 bis 24 gebildeten Stellmittel sowie ferner Verstärkungsmittel 28 zur Verstärkung der den drei Farben R = Rot, G = Grün und B = Blau zugeordneten drei vierten Steuergrössen 29, 30 und 31 für die Strahlintensitätssteuerung und Austastmittel 32 zur Strahlaustastung während des Strahlrücklaufes zwischen aufeinanderfolgenden Bildzeilen und zwischen aufeinanderfolgenden Bildern umfasst. Des weiteren umfasst das in Fig. 1 als Blockschema gezeigte Ausführungsbeispiel der vorliegenden Bildempfangsanlage in einer Zentrale 52 angeordnete, einen Videoverteiler 33 mit je einem Eingang 34 für jede der N Signalquellen und je einem Ausgang 35 für jeden der M Monitoren 1 sowie steuerbare Schaltmittel zum Anschluss jedes der M Ausgänge 35 an jeweils einen der N Eingänge 34 sowie zur Anschliessbarkeit desselben an jeden der (N−1) anderen Eingänge 34 umfassende Videoschaltmittel zur Verbindung jedes Monitors 1 der Anlage mit der für denselben ausgewählten Signalquelle über eine zur Übertragung der Signale derselben vorgesehene Verbindungsleitung 36 zwischen dem betreffenden Monitor 1 und den in der Zentrale 52 angeordneten Videoschaltmitteln, an den Monitorstandorten angeordnete, mit den Videoschaltmitteln in der Zentrale 52 verbundene Betätigungsmittel 37 zur Auswahl der die zu empfangenden Signale liefernden Signalquelle für den bzw. die Monitoren an dem betreffenden Standort und zu einer entsprechenden Steuerung der in den Videoschaltmitteln vorgesehenen steuerbaren Schaltmittel, eine der Anzahl der Signalquellen entsprechende Anzahl von N voneinander getrennten, zu den N Eingängen 34 des Videoverteilers 33 führenden Kanälen 38, von denen jeder für die Signale von jeweils einer der N Signalquellen vorgesehen und mit Signalverarbeitungsmitteln 39 zur Gewinnung der drei den Farben Rot, Grün und Blau zugeordneten vierten Steuergrössen 29, 30 und 31 für die Strahlintensitätssteuerung sowie zur Gewinnung der Synchronisationssignale 40 für den Beginn der einzelnen Bilder und der Synchronisationssignale 41 für den Beginn der einzelnen Bildzeilen aus den den Signalverarbeitungsmitteln 39 zugeführten, von der dem betreffenden Kanal 38 zugeordneten Signalquelle stammenden Signalen versehen ist, mit einem gemeinsamen Eingang 42 zum Anschluss eines die Signale der N verschiedenen Signalquellen auf N verschiedenen Kanälen bzw. Frequenzbändern übertragenden Kabels 43 versehene Mittel zur Trennung der Kanäle voneinander in Form eines Frequenzumsetzers 44 zur Umsetzung jedes einzelnen der den N verschiedenen Kanälen zugeordneten N verschiedenen Frequenzbänder auf ein Basisfrequenzband sowie zur Zuleitung desselben zu jeweils einem der N Ausgänge 45 des Frequenzumsetzers 44, und schliesslich Mittel zur Bereitstellung der den N verschiedenen Signalquellen zugeordneten, zur Steuerung der Register 16 bis 24 vorgesehenen Stellgrössen in Form eines in der Zentrale 52 angeordneten Speichers 46, der mit digitalen Speichermitteln zur Speicherung von sämtlichen, den N verschiedenen Signalquellen zugeordneten Stellgrössen und mit Wahlmitteln zur Auswahl der den zu empfangenden Signalen bzw. der diese liefernden Signalquelle zugeordneten Stellgrössen aus den in den Speichermitteln gespeicherten Stellgrössen in Form von von den Betätigungsmitteln 37 über die Steuerleitung 47 gesteuerten Zugriffsmitteln zum Zugriff zu den der jeweils ausgewählten Signalquelle zugeordneten, in den Speichermitteln gespeicherten Stellgrössen und zur Übergabe der durch den Zugriff erhaltenen Stellgrössen über die Steuerleitung 48 an die Adressdecodiermittel 27 sowie mit einer der Anzahl der an den verschiedenen Monitorstandorten angeordneten Betätigungsmittel 37 entsprechenden Anzahl von Eingängen 49 für je eine der von den einzelnen Betätigungsmitteln 37 zu dem Speicher 46 führenden Steuerleitungen 47 und einer der Anzahl M der zu der Anlage gehörenden Monitoren entsprechenden Anzahl von Ausgängen 50 zum Anschluss der zu den M einzelnen Monitoren führenden M Steuerleitungen 48 versehen ist.

Der Aufbau von Videoverteilern wie dem Videoverteiler 33 mit seinen oben angegebenen Funktionen ist bekannt. Solche Videoverteiler sind im Prinzip nach Art eines Kreuzschienenschalters aufgebaut und bestehen aus einer Matrix, die im vorliegenden Fall N Leitungsgruppen zu je fünf Adern, die an die N Eingänge 34 des Videoverteilers 33 angeschlossen sind, und M Leitungsgruppen zu je fünf Adern, die die genannten N Leitungsgruppen kreuzen und an die M Ausgänge 35 des Videoverteilers 33 angeschlossen sind, sowie jeweils fünf UND-Schaltungen an jedem Kreuzungspunkt einer Leitungsgruppe der genannten N Leitungsgruppen mit einer Leitungsgruppe der genannten M Leitungsgruppen umfasst, von denen jede mit einem UND-Schaltungs-Eingang an jeweils eine der fünf Adern der zu den genannten N Leitungsgruppen gehörenden Leitungsgruppe und mit ihrem UND-Schaltungs-Ausgang an die der eingangsseitig angeschlossenen Ader zugeordnete Ader der zu den genannten M Leitungsgruppen gehörenden Leitungsgruppe und mit ihrem anderen UND-Schaltungs-Eingang an eine dem Kreuzungspunkt zugeordnete Steuerleitung angeschlossen ist. Die Matrix ist somit mit einer der Anzahl N · M der Kreuzungspunkte und damit der Anzahl N · M der möglichen Verbindungen zwischen jeweils einem der N Eingänge 34 und jeweils einem der M Ausgänge 35 des Videoverteilers 33 entsprechenden Anzahl von N · M Steuerleitungen versehen, von denen diejenigen M Steuerleitungen mit einem Durchschaltsignal beaufschlagt werden, die den Kreuzungspunkten zugeordnet sind, an denen zur Verbindung der M Monitoren mit den jeweils ausgewählten Signalquellen Verbindungen herzustellen sind. Es ist in diesem Zusammenhang zu bemerken, dass die genannten UND-Schaltungen im vorliegenden Fall gesteuerte Gleichrichter oder Transistoren sind, die bei Fehlen eines Durchschaltsignals sperren und bei Vorhandensein eines Durchschaltsignals die an dem betreffenden Eingang 34 des Videoverteilers 33 in analoger Form vorliegenden Signale in voller Höhe und damit also in der vorgegebenen analogen Form zu dem betreffenden Ausgang 35 des Videoverteilers 33 weiterleiten. Die Beaufschlagung der besagten N · M Steuerleitungen mit Durchschaltsignalen wird durch die an den Monitorstandorten der M Monitoren der Anlage angeordneten Betätigungsmittel 37 gesteuert. Hierzu sind in dem Videoverteiler 33 weiter M Register mit je N Registerstufen vorgesehen, von denen jedes Register einem der M Monitoren der Anlage zugeordnet und mit seinen N Registerstufen an diejenigen N Steuerleitungen von den genannten N · M Steuerleitungen angeschlossen ist, die den N Kreuzungspunkten zwischen den genannten N Leitungsgruppen und derjenigen Leitungsgruppe von den genannten M Leitungsgruppen zugeordnet sind, die über den ihr zugeordneten Ausgang 35 des Videoverteilers 33 zu dem dem betreffenden Register zugeordneten Monitor führt. In jedes dieser M Register werden eine binäre Eins und $(N-1)$ Nullen eingespeichert, und die an die Registerstufe mit der binären Eins angeschlossene Steuerleitung wird mit einem Durchschaltsignal beaufschlagt. Die Einspeicherung in die Register erfolgt direkt oder indirekt von den an den Monitorstandorten der M Monitoren der Anlage angeordneten Betätigungsmitteln 37 aus, wobei im einfachsten Fall — nämlich dann, wenn jedem Monitor separate Betätigungsmittel 37 zugeordnet sind — die Betätigungsmittel 37 direkt an das jeweils zugeordnete Register angeschlossen sein können und die Einspeicherung somit direkt erfolgen kann, während andernfalls die in die einzelnen Register einzuspeichernden Daten in bekannter Weise mit einer das betreffende Register angebenden Adresse zu versehen sind und in diesem Fall in dem Videoverteiler 33 noch eine Adressdecodiereinrichtung vorzusehen ist, über die dann die Einspeicherung in die einzelnen Register erfolgt.

Der Aufbau von Betätigungsmitteln wie den Betätigungsmitteln 37 mit ihren oben angegebenen Funktionen ist ebenfalls bekannt. Im Prinzip kann als Betätigungsmittel 37 jedes Eingabegerät verwendet werden, das in der Lage ist, eingegebene oder aus einem Speicher im Eingabegerät abgerufene binär codierte Daten über eine Ausgangsleitung abzugeben. Im vorliegenden Fall kann beispielsweise an jedem Monitorstandort der Anlage als Betätigungsmittel 37 ein mit einer Tastatur versehenes Eingabegerät vorgesehen sein, wie es bei den sogenannten „personal computers" verwendet wird. Die Betätigungsmittel 37 liefern an die Register, die den Monitoren an ihrem Standort zugeordnet sind, entweder über direkte Verbindungsleitungen zu den betreffenden Registern oder vermittels den zu liefernden Daten beigefügter, die betreffenden Register angebender Adressen, Daten mit je $(N-1)$ Nullen und einer binären Eins, die in die der ausgewählten Signalquelle zugeordnete Registerstufe von den den N Signalquellen zugeordneten N Registerstufen des Registers eingespeichert wird, und zwar sowohl über die Steuerleitung 51 an die Register im Videoverteiler 33 als auch — wie im folgenden noch näher erläutert ist — über die Steuerleitung 47 an entsprechende Register im Speicher 46.

Auch der Aufbau von Signalverarbeitungsmitteln wie den Signalverarbeitungsmitteln 39 mit ihren oben angegebenen Funktionen ist allgemein bekannt. Jedes einzelne der N Signalverarbeitungsmittel 39 ist im Prinzip gleich aufgebaut wie die entsprechenden Signalverarbeitungsmittel in einem Monitor, der speziell zum Empfang der Videosignale der den betreffenden Signalverarbeitungsmitteln 39 zugeordneten Signalquelle bzw. des dort verwendeten Videosystems oder Datenverarbeitungssystems vorgesehen ist. Die Schaltungen solcher Monitoren können aus den zugehörigen Gerätebeschreibungen entnommen werden, so dass es hier nicht erforderlich ist, näher auf den Schaltungsaufbau der einzelnen Signalverarbeitungsmittel 39 einzugehen. Zu erwähnen ist hier lediglich, dass ein Teil der Signalverarbeitungsmittel 39 nach dem NTSC-Farbübertragungsverfahren, ein Teil nach dem PAL-Verfahren und ein Teil nach dem SECAM-Verfahren arbeitet, dass weiter die Zahl N der Kanäle 38 und damit der Signalverarbeitungsmittel 39 unabhängig von der Anzahl von Signalquellen, deren Signale im speziellen Fall tatsächlich empfangen werden sollen, so gross gewählt ist, dass für jedes der verschiedenen Video-Systeme mindestens ein Kanal 38 sowie die zugehörigen Signalverarbeitungsmittel 39 zur Verfügung stehen und ausserdem noch einige freie Kanäle 38 für eventuelle zukünftige Video-Systeme, die sich von allen bekannten Video-Systemen unterscheiden, oder aber für zusätzlich zu empfangende Signalquellen, die nach einem der bekannten Video-Systeme arbeiten, vorhanden sind, so dass die Anlage an alle denkbaren zukünftigen Entwicklungen ohne Schwierigkeiten anpassbar ist, und dass schliesslich die Signalhöhen an den Ausgängen der einzelnen Signalverarbeitungsmittel 39 für vorgegebene Testbilder normiert sind, wobei bei diesen normierten Höhen die dem Video-System, mit dem die den betreffenden Signalverarbeitungsmitteln 39 zugeordnete Signalquelle arbeitet, entsprechende Bildpunktzahl pro Bild in der Weise berücksichtigt ist, dass die mittlere Helligkeit im Bildfeld der Bildröhre 6 bei allen N empfangbaren Signalquellen etwa gleich gross wird. Diese normierten Höhen sind bei unterschiedlicher Bildpunktzahl pro Bild in der Regel deswegen nicht gleich, weil bei unterschiedlicher Bildpunktzahl pro Bild bei den Monitoren 1 der vorliegenden Anlage, wie oben schon erläutert, mit unterschiedlicher Strahlfokussierung gearbeitet wird (siehe die dafür vorgesehenen Mittel 4, 11, 15 und 24 in Fig. 1) und sich die Strahlintensität im Bildfeld der Bildröhre 6 mit unterschiedlicher Strahlfokussierung verändert. Den Signalverarbeitungsmitteln 39 werden vom Frequenzumsetzer 44 jeweils auf einem eine Bandbreite bis zu etwa 100 MHz aufweisenden Basisfrequenzband die Videosignale der den betreffenden Signalverarbeitungsmitteln 39 zugeordneten Signalquelle zugeführt, und aus diesen Videosignalen werden in den Signalverarbeitungsmitteln 39 die schon erwähnten, den drei Farben Rot, Grün und Blau zugeordneten drei vierten Steuergrössen 29, 30 und 31 und ferner die ebenfalls bereits erwähnten Synchronisationssignale 40 und 41 für den Bildbeginn und den Zeilenbeginn gewonnen und an die fünf Ausgänge der Signalverarbeitungsmittel 39 abgegeben. In diesem Zusammenhang ist darauf hinzuweisen, dass die Signalverarbeitungsmittel 39 im Falle, dass in den ihnen zugeführten Videosignalen nur Synchronisationssignale für den Bildbeginn, jedoch keine Synchronisationssignale für den Zeilenbeginn enthalten sind, die Synchronisationssignale 41 für den Zeilenbeginn z.B. mit Hilfe eines auf die Bildpunktfrequenz abgestimmten Taktimpulsgenerators, dessen Impulse über eine UND-Schaltung einer aus Zähler, Vergleicher und Register bestehenden Zählschaltung für die Bildpunktzahl pro Zeile (zuzüglich einer der Austastzeit für den Zeilenrücklauf entsprechenden Punktzahl) zugeführt werden, in Form der Ausgangsimpulse dieser Zählschaltung selbst erzeugen, wobei die Ausgangsimpulse dieser Zählschaltung einer weiteren, aus Zähler, Vergleicher und Register bestehenden Zählschaltung für die Zeilenzahl pro Bild zugeführt werden und die Ausgangsimpulse dieser weiteren Zählschaltung dann jeweils ein von den Synchronisationssignalen für den Bildbeginn gestartetes, das Durchschaltsignal für die genannten UND-Schaltung lieferndes Flip-Flop stoppen.

Des weiteren ist natürlich auch der Aufbau von Frequenzumsetzern wie dem Frequenzumsetzer 44 mit seinen oben angegebenen Funktionen ganz allgemein bekannt und braucht daher hier nicht näher erörtert zu werden. Schaltungen solcher Frequenzumsetzer, denen eingangsseitig über ein gemeinsames Kabel die Signale von N verschiedenen Signalquellen auf N verschiedenen Kanälen bzw. Frequenzbändern zugeführt werden und die jedes einzelne der den N verschiedenen Kanälen zugeordneten N verschiedenen Frequenzbänder auf ein Basisfrequenzband umsetzen, sind beispielsweise aus der Trägerfrequenz-Übertragungstechnik bekannt. Im Prinzip besteht der Frequenzumsetzer 44 aus N Mischeinrichtungen zur multiplikativen Mischung des über das gemeinsame Kabel zugeführten Eingangssignals mit je einer der Frequenzlage des auszusiebenden Frequenzbandes bzw. Kanals angepassten Mischfrequenz und N Filtern zur Aussiebung des auf das Basisfrequenzband umgesetzten auszusiebenden Frequenzbandes bzw. Kanals aus dem durch die multiplikative Mischung erhaltenen Frequenzgemisch, wobei die einzelnen Mischfrequenzen vorzugsweise durch Aussiebung der Oberwellen eines gemeinsamen Rechteckgenerators gewonnen werden. Der Frequenzumsetzer 44 erhält seine Eingangssignale beispielsweise über ein an seinen Eingang 42 angeschlossenes 3-GHz-Kabel 43 und gibt über seine N Ausgänge 45 jeweils auf einem bis etwa 100 MHz reichenden Basisfrequenzband die von den N Signalquellen stammenden Videosignale ab.

Aus der Computertechnik sind schliesslich auch Speicher mit den erforderlichen Zugriffsmitteln zum Zugriff zu den gespeicherten Daten wie der Speicher 46 mit seinen oben angegebenen Funktionen bekannt. Solche Speicher bestehen im Prinzip aus Registern für die in der Regel im Binärcode eingespeicherten Daten, Zugriffsmitteln zum Zugriff zu den Registern des Speichers und zur Übergabe der durch den Zugriff erhaltenen Daten an den bzw. einen der Ausgänge des Speichers und Steuermitteln zur Steuerung der Zugriffsmittel über an den bzw. die Steuereingänge des Speichers angeschlossene Steuerleitungen. Im vorliegenden Fall sind die Register des Speichers 46 N serielle Schieberegister, von denen jedes einer der N Signalquellen zugeordnet ist und die dieser Signalquelle zugeordneten Stellgrössen samt zugehörigen Adressen für die in den Monitoren 1 als steuerbare Stellmittel vorgesehenen Register 16 bis 24 in Form von neun aufeinanderfolgenden, seriell eingespeicherten Wörtern enthält und durch Verbindung seines Registerausganges mit seinem Registereingang zu einem ringförmigen Schieberegister geschlossen ist, in dem die eingespeicherten Daten entweder bei fest an das Schieberegister angeschlossenem Taktgeber ständig oder aber im Falle eines Anschlusses des Taktgebers an das Schieberegister über eine UND-Schaltung bei Beaufschlagung des zweiten Einganges der UND-Schaltung mit einem Durchschaltsignal umlaufen, so dass am Registerausgang des Schieberegisters seriell die einzelnen, Zeichen jedes Wortes und nacheinander die einzelnen, in das Schieberegister eingespeicherten Wörter ausgegeben werden. An den Taktgeber angeschlossen ist ferner eine aus Zähler, Vergleicher und Register bestehende Zählschaltung für die Wortlänge bzw. die Anzahl der Zeichen pro Wort (zuzüglich etwaiger Leerzeichen zwischen aufeinanderfolgenden Wörtern), die jeweils nach Ausgabe des letzten Zeichens jedes Wortes am Schieberegisterausgang an die Taktimpulsleitung 53 einen Negativimpuls abgibt, der zur Auslösung der Einspeicherung der in dem betreffenden Wort enthaltenen Stellgrösse in das derselben zugeordnete, als steuerbares Stellmittel vorgesehene Register im Monitor 1 dient und zu diesem Zweck mit der Taktimpulsleitung 53 den Adressdecodiermitteln 17 im Monitor 1 zugeführt wird. Als Zugriffsmittel zum Zugriff zu den Registern des Speichers bzw. den darin enthaltenen Daten ist im vorliegenden Fall im Speicher 46 ein Videoverteiler enthalten, der mit dem einzigen Unterschied, dass jede Leitungsgruppe nicht fünf, sondern nur eine Ader umfasst und entsprechend an jedem Kreuzungspunkt nicht fünf, sondern nur eine UND-Schaltung vorgesehen ist, völlig gleich aufgebaut ist wie der Videoverteiler 33 und von den Betätigungsmitteln 37 auch in völlig gleicher Weise wie der Videoverteiler 33 gesteuert wird. Der im Speicher 46 enthaltene Videoverteiler hat — ebenso wie der Videoverteiler 33 — N Eingänge, die an die Registerausgänge der N Schieberegister im Speicher 46 angeschlossen sind, und weiter — ebenfalls so wie der Videoverteiler 33 — M Ausgänge, an die die zu den M Monitoren der Anlage führenden Steuerleitungen 48 angeschlossen sind. Der im Speicher 46 enthaltene Videoverteiler verbindet die Steuerleitung 48 jedes Monitors 1 der Anlage mit dem Registerausgang von demjenigen der N Schieberegister im Speicher 46, das der für den betreffenden Monitor 1 durch die diesem Monitor zugeordneten Betätigungsmittel 37 ausgewählten Signalquelle zugeordnet ist. Diese Verbindung bleibt so lange erhalten, bis für den betreffenden Monitor 1 durch die zugeordneten Betätigungsmittel 37 eine andere Signalquelle ausgewählt wird. Daher werden vom Moment der Auswahl der Signalquelle durch die Betätigungsmittel 37 und der damit erfolgenden Erstellung dieser Verbindung an bis zur Auswahl einer anderen Signalquelle und dem sich ergebenden Abbruch dieser Verbindung die in dem der ausgewählten Signalquelle zugeordneten Schieberegister umlaufenden Wörter und damit die in diesen Wörtern enthaltenen, der ausgewählten Signalquelle zugeordneten Stellgrössen (jedenfalls bei fest an das Schieberegister angeschlossenem Taktgeber) ununterbrochen sowie in sich ständig wiederholender Folge seriell über die Steuerleitung 48 den Adressdecodiermitteln 27 im Monitor 1 zugeführt, so dass vom Moment der Auswahl der Signalquelle durch die Betätigungsmittel 37 an durch die Adressdecodiermittel 27 eine Umstellung der im Monitor 1 als steuerbare Stellmittel vorgesehenen Register 16 bis 24 auf die der neu ausgewählten Signalquelle zugeordneten Stellgrössen erfolgen kann, die dann nach einem Umlauf der Wörter im Schieberegister beendet ist, wobei diese Umstellung jeweils bei demjenigen der Register 16 bis 24 beginnt, dessen zugeordnete Stellgrösse nach der Neuauswahl der Signalquelle als erste in den Adressdecodiermitteln 27 einläuft. Diese unmittelbar nach der Neuauswahl der Signalquelle beginnende Umstellung der Register 16 bis 24 ist möglich, weil den Adressdecodiermitteln 27, wie oben erwähnt, nach jedem über die Steuerleitung 48 eingelaufenen Wort über die Taktimpulsleitung 53 ein Negativimpuls zugeführt wird, der die Einspeicherung der in dem Wort enthaltenen Stellgrösse in das zugeordnete Register bewirkt. Nach der Umstellung werden die Register 16 bis 24 während der gesamten Dauer des Bestehens der genannten Verbindung ständig auf die schon in den Registern stehenden Stellgrössen „nachgestellt", was jedoch auf die in den Registern gespeicherten Stellgrössen keinen Einfluss mehr hat, da ein in einem Register gespeicherter Wert bei dem Versuch einer Einspeicherung des gleichen Wertes in dieses Register in dem Register stehenbleibt, und zwar ohne jede Unterbrechung im Moment des Einspeicherungsversuches. Lediglich im Falle von Übertragungsfehlern bei der Übertragung der Stellgrössen vom Speicher 46 zu einem der Register 16 bis 24 werden die Übertragungsfehler mit dem nächsten Umlauf der Wörter im Schieberegister korrigiert, was aber ein durchaus erwünschter Effekt der genannten ständigen „Nachstellung" ist. Natürlich ist es schaltungstechnisch auch möglich, die Zuführung von Stellgrössen zu den Registern 16 bis 24 nach der Umstellung derselben abzubrechen (z.B. mit Hilfe der oben schon genannten UND-Schaltung zwischen Taktgeber und Schieberegister), aber das würde nur einen grösseren Aufwand an Steuermitteln und insbesondere auch an Steuerleitungen zwischen der Zentrale 52 und jedem einzelnen der M Monitoren 1 der Anlage erfordern und praktisch keine Vorteile, sondern lediglich den Nachteil des Wegfalles der genannten Korrekturmöglichkeit bei etwaigen Übertragungsfehlern und unter Umständen auch noch den Nachteil von Zeitverzögerungen bei der Umstellung der Register 16 bis 24 mit sich bringen und ist daher nicht empfehlenswert. Im Zusammenhang mit dem im Speicher 46 enthaltenen Videoverteiler wäre schliesslich noch darauf hinzuweisen, dass dieser Videoverteiler ohne weiteres mit dem Videoverteiler 33 kombiniert werden kann, indem bei dem Videoverteiler 33 in jeder der genannten N Leitungsgruppen und in jeder der genannten M Leitungsgruppen jeweils anstelle von fünf Adern sechs Adern und entsprechend an den Kreuzungspunkten jeweils anstelle von fünf UND-Schaltungen sechs UND-Schaltungen vorgesehen werden und die zusätzlichen sechsten Adern der genannten N Leitungsgruppen an die Registerausgänge der N Schieberegister des Speichers 46 sowie die zusätzlichen sechsten Adern der genannten M Leitungsgruppen an die zu den M Monitoren der Anlage führenden M Steuerleitungen 48 angeschlossen werden. Eine solche Kombination hat den Vorteil, dass die gesamten Steuermittel, die bei einem im Speicher 46 enthaltenen Videoverteiler zur Steuerung desselben mit im Speicher 46 enthalten sein müssten, entfallen können, weil die im Videoverteiler 33 ohnehin enthaltenen Steuermittel bei einer solchen Kombination auch die Steuerung der besagten, an den Kreuzungspunkten zusätzlich vorgesehenen sechsten UND-Schaltungen mit übernehmen. Wenn im Falle einer solchen Kombination die N Schieberegister des Speichers 46 sowie der die Fortschaltimpulse für dieselben liefernde Taktgeber einschliesslich der erwähnten, an denselben angeschlossenen Zählschaltung zur Erzeugung der besagten Negativimpulse mit in den Videoverteiler 33 integriert werden, kann somit der ganze Speicher 46 einschliesslich der zu demselben führenden Steuerleitungen 47 wegfallen.

Die Wirkungsweise der in den Figuren 1 bis 4 gezeigten Bildempfangsanlage sei im folgenden an einem Beispiel erläutert: Es sei angenommen, dass von den M Monitoren der Bildempfangsanlage der in Fig. 1 gezeigte Monitor 1 mit der Signalquelle verbunden werden soll, deren Signale im Frequenzumsetzer 44 dem innerhalb des Blockes 44 mit „2" bezeichneten 2-ten Kanal 38 zugeführt werden. Dieser Signalquelle seien folgende Parameter zugeordnet: Folgefrequenz von den Bildwechsel steuernden Synchronisationssignalen

$$f_B = 33\frac{1}{3}\,\text{Hz};$$

Dauer des Zeitintervalls zwischen zwei aufeinanderfolgenden Bildern

$$\Delta T_B = \frac{14}{9} \text{ msec;}$$

Folgefrequenz von den Bildzeilenwechsel steuernden Synchronisationssignalen $f_z$ = 18 kHz; Dauer des Zeitintervalls zwischen zwei aufeinanderfolgenden Bildzeilen

$$\Delta T_z = \frac{1}{3090} \text{ msec;}$$

Folgefrequenz von die einzelnen Bildpunkte steuernden Bildpunktsignalen $f_P$ = 9,27 MHz; Dauer des Zeitintervalls zwischen zwei aufeinanderfolgenden Bildpunktsignalen

$$\Delta T = \frac{1}{46\,350} \text{ msec;}$$

Bildschreibweise in bezug auf die Aufeinanderfolge der zur Darstellung eines Gesamtbildes dienenden 512 Bildzeilen in Form von 3 jeweils aus den $(3 \cdot n + m)$-ten Bildzeilen des Gesamtbildes mit n = 0, 1, 2, ... 170 und m = 1, 2, 3 zusammengesetzten Bildern (bei m = 3 geht n nur bis 169); Bildpunktschreibweise in bezug auf die Signalisierung der Bildpunktintensität in Analogform; Bildformat quadratisch; Bildübertragung in den drei Grundfarben Rot, Grün und Blau; Farbübertragungssystem PAL. Aus diesen der Signalquelle zugeordneten Parametern ergibt sich eine Bildpunktzahl p pro Bildzeile von p = $f_P(1/f_z - \Delta T_z)$ = 512, eine Austastzeit $\Delta T_z$ für den Strahlrücklauf zwischen zwei aufeinanderfolgenden Zeilen entsprechend $\Delta p = f_P \cdot \Delta T_z$ = 3 Bildpunkten, eine Zeilenzahl z pro Gesamtbild von z = $f_z(1/f_B - \Delta T_B)$ = 512, eine Austastzeit $\Delta T_B$ für den Strahlrücklauf zwischen zwei aufeinanderfolgenden Gesamtbildern entsprechend $\Delta z = f_z \cdot \Delta T_B$ = 28 Bildzeilen sowie für die aus jeweils 3 Bildern bzw. Teilbildern zusammengesetzten Gesamtbilder eine Teilbildzahl k = 3, eine Zeilenzahl $z_k$ pro Teilbild von

$$z_k = \frac{z}{k} = 171$$

(beim letzten Teilbild 170) und entsprechend eine Stufenzahl n pro Teilbild von

$$n = \frac{f_z}{k}\left(\frac{1}{f_B} - \Delta T_B - \frac{k}{f_z}\right) = \frac{z}{k} - 1 = 170$$

(beim letzten Teilbild 169), eine Stufenhöhe entsprechend 3 Zeilen und eine Stufenbreite entsprechend 1 Zeile inkl. Austastzeit $\Delta T_z$ bzw. entsprechend 515 Bildpunkten. Die Bildröhre 6 des Monitors 1 und ebenso auch die Bildröhren der übrigen (M−1) Monitoren der Anlage sollen ein rechteckiges Bildfeld mit einer Breite A = 432 mm und einer Höhe B = 324 mm haben, die ersten Ablenkmittel 2 zur Strahlablenkung in Zeilenrichtung und der zugehörige Verstärker 13 sollen bei einer ersten Steuergrösse 8 für die Strahlablenkung in Zeilenrichtung von a = $a_I$ eine Strahlablenkung auf den linken Bildfeldrand und bei einer ersten Steuergrösse 8 von a = $a_{II}$ eine Strahlablenkung auf den rechten Bildfeldrand bewirken, die zweiten Ablenkmittel 3 zur Strahlablenkung senkrecht zur Zeilenrichtung und der zugehörige Verstärker 14 sollen bei einer zweiten Steuergrösse 10 für die Strahlablenkung senkrecht zur Zeilenrichtung von b = $b_I$ eine Strahlablenkung auf den oberen Bildfeldrand und bei einer zweiten Steuergrösse 10 von b = $b_{II}$ eine Strahlablenkung auf den unteren Bildfeldrand bewirken und die Fokussiermittel 4 zur Strahlfokussierung sowie der zugehörige Verstärker 15 sollen bei einer dritten Steuergrösse 12 für die Strahlfokussierung von c = $c_I$ einen Bildpunktdurchmesser im Bereich der Bildfeldmitte von d = $d_I$ = $B/z_{max}$ = 324 mm/1536 = 0,21 mm und bei einer dritten Steuergrösse 12 von c = $c_{II}$ einen Bildpunktdurchmesser im Bereich der Bildfeldmitte von d = $d_{II}$ = $B/z_{min}$ = 324 mm/216 = 1,5 mm bewirken. Zu einer möglichst guten Ausnutzung des Bildfeldes der Bildröhre 6 bei gleichzeitiger Formattreue des im Bildfeld der Bildröhre 6 dargestellten Bildes mit dem der Signalquelle als Parameter zugeordneten Bildformat sollen ferner die Abstände $B_1$ und $B_2$ zwischen den in Zeilenrichtung verlaufenden beiden Bildrändern des zur Abbildung benutzten Teiles des Bildfeldes der Bildröhre 6 und den in Zeilenrichtung verlaufenden beiden Bildrändern des Bildfeldes der Bildröhre 6 gleich Null sein, und zur Erzielung der besagten Formattreue muss dann in Anbetracht dessen, dass das der Signalquelle als Parameter zugeordnete Bildformat quadratisch ist, die Breite $(A − A_1 − A_2)$ des zur Abbildung benutzten Teiles des Bildfeldes der Bildröhre 6 gleich $A − A_1 − A_2$ = B sein, woraus sich mit A = 432 mm und B = 324 mm für die Abstände $A_1$ und $A_2$ zwischen den senkrecht zur Zeilenrichtung verlaufenden beiden Bildrändern des zur Abbildung benutzten Teiles des Bildfeldes der Bildröhre 6 und den senkrecht zur Zeilenrichtung verlaufenden beiden Bildrändern des Bildfeldes der Bildröhre 6 die Beziehung $A_1 + A_2 = A − B$ = 432 mm − 324 mm = 108 mm ergibt. Die Abstände $A_1$ und $A_2$ sollten zweckmässig mit $A_1 = A_2$ = 54 mm gleich gross sein, damit sich der zur Abbildung benutzte Teil des Bildfeldes der Bildröhre 6 im mittleren Bereich des Bildfeldes der Bildröhre 6 befindet. Das wird dadurch erreicht, dass sich bei einem dem Mittelwert $\frac{1}{2}(a_1 + a_2)$ aus Anfangs- und Endwert der ersten Steuergrösse entsprechenden Wert der ersten Steuergrösse 8 keine Strahlablenkung in Zeilenrichtung ergibt. Unter Voraussetzung eines linearen Zusammenhanges zwischen der ersten Steuergrösse 8 und der Strahlablenkung in Zeilenrichtung ergibt sich damit für den Anfangswert $a_1$ der ersten Steuergrösse 8

$$a_1 = a_I + (a_{II} - a_I) \cdot \frac{A_1}{A} = a_I$$

$$+ (a_{II} - a_I) \cdot \frac{54 \text{ mm}}{432 \text{ mm}} = a_I + \frac{a_{II} - a_I}{8}$$

und für den Endwert $a_2$ der ersten Steuergrösse 8

$$a_2 = a_{II} - (a_{II} - a_I \cdot \frac{A_2}{A}) = a_{II}$$

$$- (a_{II} - a_I) \cdot \frac{54 \text{ mm}}{432 \text{ mm}} = a_{II} - \frac{a_{II} - a_I}{8}$$

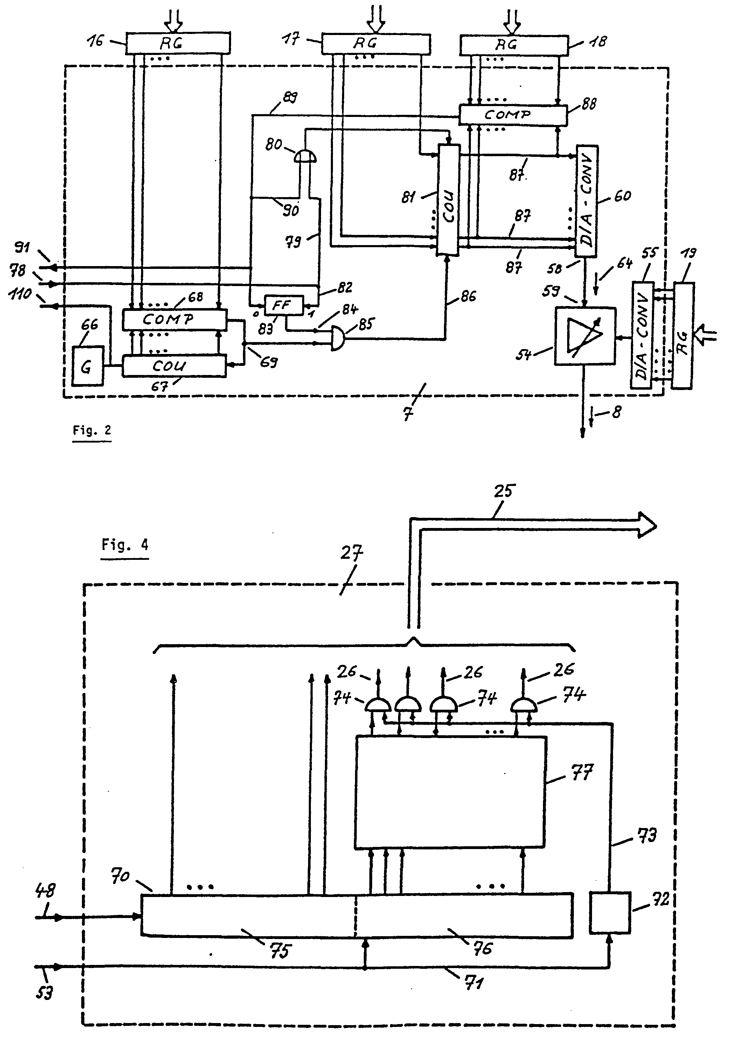

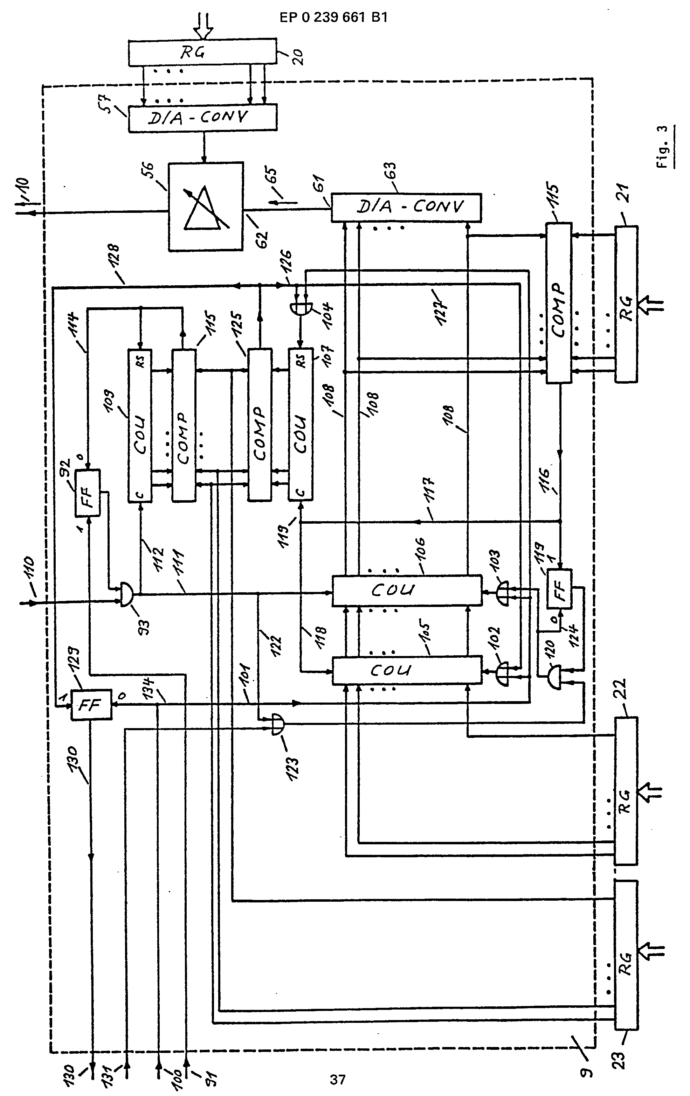

und für den Mittelwert aus Anfangs- und Endwert der ersten Steuergrösse $\frac{1}{2}(a_1 + a_2) = \frac{1}{2}(a_I + a_{II})$ und somit der Mittelwert aus den Werten der ersten Steuergrösse 8 für den linken und rechten Bildrand des Bildfeldes der Bildröhre 6, der bei dem vorausgesetzten linearen Zusammenhang zwischen der ersten Steuergrösse 8 und der Strahlablenkung in Zeilenrichtung ein Auftreffen des Strahles in der Mitte zwischen rechtem und linkem Bildrand des Bildfeldes der Bildröhre 6 und somit also keine Strahlablenkung in Zeilenrichtung ergibt. Für den Anfangswert $b_1$ und den Endwert $b_2$ der zweiten Steuergrösse 10 für die Strahlablenkung senkrecht zur Zeilenrichtung ergeben sich unter der obigen Voraussetzung $B_1 = B_2 = 0$ die Werte $b_I$ und $b_{II}$ der zweiten Steuergrösse 10 für den oberen und den unteren Bildrand des Bildfeldes der Bildröhre 6, also $b_1 = b_I$ und $b_2 = b_{II}$, und da sich bei vorausgesetztem linearem Zusammenhang zwischen der zweiten Steuergrösse 10 und der Strahlablenkung senkrecht zur Zeilenrichtung bei dem Mittelwert $\frac{1}{2}(b_I + b_{II})$ der Werte der zweiten Steuergrösse 10 für den oberen und den unteren Bildrand des Bildfeldes der Bildröhre 6 ein Auftreffen des Strahles in der Mitte zwischen oberem und unterem Bildrand des Bildfeldes der Bildröhre 6 und damit keine Strahlablenkung senkrecht zur Zeilenrichtung ergibt und dieser Mittelwert $\frac{1}{2}(b_I + b_{II})$ mit $b_1 = b_I$ und $b_2 = b_{II}$ gleich $\frac{1}{2}(b_1 + b_2)$ ist, ergibt sich somit auch bei einem dem Mittelwert $\frac{1}{2}(b_1 + b_2)$ aus Anfangs- und Endwert der zweiten Steuergrösse entsprechenden Wert der zweiten Steuergrösse 10 keine Strahlablenkung senkrecht zur Zeilenrichtung. Wird weiter vorausgesetzt, dass der die erste Steuergrösse 8 für die Strahlablenkung in Zeilenrichtung liefernde, innerhalb des in Fig. 2 im einzelnen dargestellten ersten Generators 7 vorgesehene Verstärker 54 mit einstellbarer Verstärkung durch den im Register 19 stehenden, von dem Digital-Analog-Wandler 55 in einen entsprechenden Analogwert umgesetzten digitalen Stellwert auf einen Verstärkungsfaktor $V_a$ und der die zweite Steuergrösse 10 für die Strahlablenkung senkrecht zur Zeilenrichtung liefernde, innerhalb des in Fig. 3 im einzelnen dargestellten zweiten Generators 9 vorgesehene Verstärker 56 mit einstellbarer Verstärkung durch den im Register 20 stehenden, von dem Digital-Analog-Wandler 57 in einem entsprechenden Analogwert umgesetzten digitalen Stellwert auf einen Verstärkungsfaktor $V_b$ eingestellt ist, und dass sämtliche Digital-Analog-Wandler im Monitor 1, also der im ersten Generator 7 (Fig. 2) vorgesehene, mit seinem Ausgang 58 an den Verstärkereingang 59 des Verstärkers 54 angeschlossene Digital-Analog-Wandler 60 und der den Analogwert für die Verstärkungseinstellung des Verstärkers 54 liefernde Digital-Analog-Wandler 55 sowie der im zweiten Generator 9 (Fig. 3) vorgesehene, mit seinem Ausgang 61 an den Verstärkereingang 62 des Verstärkers 56 angeschlossene Digital-Analog-Wandler 63 und der den Analogwert für die Verstärkungseinstellung des Verstärkers 56 liefernde Digital-Analog-Wandler 57 und schliesslich auch der den dritten Generator 11 (Fig. 1) zur Erzeugung der dritten Steuergrösse 12 bildende Digital-Analog-Wandler 11, pro Binäreinheit an ihrem Eingang ausgangsseitig eine Steuergrösseneinheit von einem g (also z.B. 1 g = 1 μA) abgeben, dann ergibt sich bei Darstellung der Steuergrössen 8, 10 und 12 in Form von Produkten $a = g \cdot a^*$ und $b = g \cdot b^*$ von Zahlenwerten $a^*$ bzw. $b^*$ mit der Steuergrösseneinheit g für Anfangs- und Endwert $a_1$ bzw. $a_2$ der ersten Steuergrösse 8 und $b_1$ bzw. $b_2$ der zweiten Steuergrösse 10 $a_1 =$

$$g \cdot \left( a_I^* + \frac{a_{II}^* - a_I^*}{8} \right), \ a_2 = g \cdot \left( a_{II}^* - \frac{a_{II}^* - a_I^*}{8} \right),$$

$$b_1 = g \cdot b_I^*$$

und $b_2 = g \cdot b_{II}^*$ und für Anfangs- und Endwert $a_{01}$ bzw. $a_{02}$ der Steuergrösse 64 am Eingang 59 des Verstärkers 54 und am Ausgang 58 des Digital-Analog-Wandlers 60

$$a_{01} = \frac{g}{V_a} \left( a_I^* + \frac{a_{II}^* - a_I^*}{8} \right) \text{ und } a_{02} = \frac{g}{V_a}$$

$$\left( a_{II}^* - \frac{a_{II}^* - a_I^*}{8} \right)$$

sowie für Anfangs- und Endwert $b_{01}$ bzw. $b_{02}$ der Steuergrösse 65 am Eingang des Verstärkers 56 und am Ausgang des Digital-Analog-Wandlers 63 (Fig. 3)

$$b_{01} = \frac{g}{V_b} \cdot b_I^* \text{ und } b_{02} = \frac{g}{V_b} \cdot b_{II}^*$$

und schliesslich für den Anfangszahlenwert $a_{01}^*$ und den Endzahlenwert $a_{02}^*$ am Eingang des Digital-Analog-Wandlers 60 (Fig. 2)

$$a_{01}^* = \frac{a_{01}}{g} = \frac{1}{V_a} \left( a_I^* + \frac{a_{II}^* - a_I^*}{8 \cdot} \right)$$

und

$$a_{02}^* = \frac{a_{02}}{g} = \frac{1}{V_a} \left( a_{II}^* - \frac{a_{II}^* - a_I^*}{8} \right)$$

sowie für den Anfangszahlenwert $b_{01}^*$ und den Endzahlenwert $b_{02}^*$ am Eingang des Digital-Analog-Wandlers 63 (Fig. 3)

$$b_{01}^* = \frac{b_{01}}{g} = \frac{1}{V_b} \cdot b_I^* \text{ und } b_{02}^* = \frac{b_{02}}{g} = \frac{1}{V_b} \cdot b_{II}^*.$$

Unter den obigen Voraussetzungen ist somit in das Register 17 zur Einstellung des ersten Generators 7 auf den Anfangswert der ersten Steuergrösse 8 der Zahlenwert

$$\frac{1}{V_a}\left(a_I^* + \frac{a_{II}^* - a_I^*}{8}\right)$$

und in das Register 18 zur Einstellung des ersten Generators 7 auf den Endwert der ersten Steuergrösse 8 der Zahlenwert

$$\frac{1}{V_a}\left(a_{II}^* - \frac{a_{II}^* - a_I^*}{8}\right)$$

sowie in das Register 22 zur Einstellung des zweiten Generators 9 auf den Anfangswert der zweiten Steuergrösse 10 der Zahlenwert

$$\frac{1}{V_b} \cdot b_I^*$$

und in das Register 21 zur Einstellung des zweiten Generators 9 auf den Endwert der zweiten Steuergrösse 10 der Zahlenwert

$$\frac{1}{V_b} \cdot b_{II}^*$$

jeweils in binärer Form einzuspeichern. Für die Verstärkungsfaktoren $V_a$ und $V_b$ sind dabei die Werte

$$V_a = \frac{q \cdot \tfrac{3}{4}(a_{II}^* - a_I^*)}{f_G(1/f_Z - \Delta T_Z)} \text{ und } V_b = \frac{b_{II}^* - b_I^*}{f_Z(1/f_B - \Delta T_B)}$$

einzusetzen, wenn mit $f_G$ die Impulsfrequenz des in dem ersten Generator 7 (Fig. 2) vorgesehenen Impulsgenerators 66 und mit q das ganzzahlige Teilverhältnis des an den Ausgang des Impulsgenerators 66 angeschlossenen, von dem Zähler 67 und dem Vergleicher 68 sowie dem Register 16 gebildeten Frequenzteilers bezeichnet ist, so dass sich endgültig für die Zahlenwerte, auf die die Register 17, 18, 21 und 22 zu setzen sind, folgende Werte ergeben:

Register 17 auf $f_G(1/f_Z - \Delta T_Z)\dfrac{7 + a_{II}/a_I}{6q(a_{II}/a_I - 1)}$,

Register 18 auf $f_G(1/f_Z - \Delta T_Z)\dfrac{7 + a_{II}/a_I}{6q(a_{II}/a_I - 1)}$,

Register 21 auf $\dfrac{f_Z(1/f_B - \Delta T_B)}{1 - b_I/b_{II}}$ und

Register 22 auf $\dfrac{f_Z(1/f_B - \Delta T_B)}{b_{II}/b_I - 1}$.

Das Teil des an den Impulsgenerator 66 angeschlossenen Frequenzteilers bildende Register 16 ist auf das ganzzahlige Frequenzteilverhältnis q zu setzen. Die Grösse von q ist so zu wählen, dass die Impulsfrequenz $f_G/q$ am Ausgang 69 des Frequenzteilers möglichst genau mit der Folgefrequenz $f_P$ der die einzelnen Bildpunkte steuernden Bildpunktsignale oder aber möglichst genau mit einem ganzzahligen Vielfachen dieser Folgefrequenz $f_P$ übereinstimmt, dass also $f_G/q$ ungefähr gleich $v \cdot f_P$ mit $v = 1, 2, 3, ...$ und damit

$$q \approx \frac{f_G}{v \cdot f_P}$$

ist, wobei v vorzugsweise gleich 1 zu wählen ist. Wird weiter vorausgesetzt, dass die die einstellbare Verstärkung liefernden Verstärker 54 und 56 Verstärkungsfaktoren $V_a$ bzw. $V_b$ haben, die das

$$\frac{1}{1024}\text{-fache}$$

der von den Digital-Analog-Wandlern 55 bzw. 57 an ihre Stelleingänge gelieferten Steuergrössen bzw. das

$$\frac{1}{1024}\text{-fache}$$

der in den Registern 19 bzw. 20 stehenden Zahlenwerte betragen, dann sind die Register 19 und 20 auf folgende Werte zu setzen:

Register 19 auf $\dfrac{768q(a_{II}^* - a_I^*)}{f_G(1/f_Z - \Delta T_Z)}$ und

Register 20 auf $\dfrac{1024(b_{II}^* - b_I^*)}{f_Z(1/f_B - \Delta T_B)}$.

Das Register 23 schliesslich ist auf die Teilbildzahl k zu setzen, im vorliegenden Fall bei aus jeweils 3 Bildern bzw. Teilbildern zusammengesetzten Gesamtbildern also auf k = 3 (bei nicht in Teilbilder unterteilten Gesamtbildern auf k = 1). In bezug auf die dritte Steuergrösse 12 für die Strahlfokussierung (Fig. 1) wird ferner vorausgesetzt, dass der Durchmesser eines von dem fokussierten Strahl im Bereich der Bildmitte des Bildfeldes der Bildröhre 6 erzeugten, einen Bildpunkt repräsentierenden Leuchtfleckes oder kurz der Bildpunktdurchmesser d umgekehrt proportional dieser mit 12 bezifferten dritten Steuergrösse c sei und der Proportionalitätsfaktor $32 \cdot B \cdot g$ beträgt, dass also

$$d = \frac{32Bg}{c} \text{ bzw. } d = \frac{32B}{c^*}$$

ist, wenn mit $c^*$ der im Register 24 stehende Zahlenwert bezeichnet ist. Gemäss den obigen Angaben, wonach

$$d = \frac{B}{z}$$

sein soll, ergibt sich somit für den Zahlenwert $c^* = 32z = 32f_Z(1/f_B - \Delta T_B)$, so dass also das Register 24 auf den Wert $32f_Z(1/f_B - \Delta T_B)$ zu setzen ist. Zu bemerken ist schliesslich hinsichtlich der oben in allgemeiner Form angegebenen, in die Register 16 bis 24 einzuspeichernden Zahlenwerte noch, dass die sich aus den obigen Formeln ergebenden Zahlenwerte auf ganzzahlige Werte abzurunden sind, weil die Register 16 bis 24 nur auf ganzzahlige Werte gesetzt werden können. Für die Einspeicherung der Zahlenwerte sind als Register 16 ein 8-Bit-Register, als Register 17 bis 22 und 24 je ein 16-Bit-Register und als Register 23 ein 4-Bit-Register vorgesehen. Wird im vorliegenden Fall q so gewählt, dass $q \approx f_G/f_P$ ist bzw. dass der obige Faktor $v = 1$ ist, dann ergibt sich bei einer Impulsfrequenz $f_G$ des Impulsgenerators 66 von $f_G = 256$ MHz für q ein Rechenwert von

$$q = \frac{256 \text{ MHz}}{9,27 \text{ MHz}} = 27,6159655$$

und damit als nächster ganzzahliger Wert $q = 28$, auf den das Register 16 zu setzen ist. Mit $f_G = 256$ MHz und $q = 28$ ergeben sich bei $a_{II}/a_I = a_{II}^*/a_I^* = 12$ und $a_{II}^* = 12\,360$ (entsprechend $a_{II} = 12,36$ mA für $g = 1$ µA) für die in die Register 17 bis 19 einzuspeichernden Werte aus den obigen Formeln Rechenwerte von 145,372355 bzw. 650,350009 bzw. 17\,231,33671, so dass also das Register 17 auf den abgerundeten Wert 145, das Register 18 auf den abgerundeten Wert 650 und das Register 19 auf den abgerundeten Wert 17\,231 zu setzen ist. Des weiteren ergeben sich bei $b_{II}/b_I = b_{II}^*/b_I^* = 9$ und $b_{II}^* = 9270$ (entsprechend $b_{II} = 9,27$ mA für $g = 1$ µA) für die in die Register 20 bis 22 einzuspeichernden Werte aus den obigen Formeln Rechenwerte von 16\,480 bzw. 576 bzw. 64, so dass also das Register 20 auf den Wert 16\,480, das Register 21 auf den Wert 576 und das Register 22 auf den Wert 64 zu setzen ist. Das Register 23 ist wie erwähnt auf die Teilbildzahl und im vorliegenden Fall damit also auf den Wert 3 zu setzen, und in das Register 24 ist nach der obigen Formel der Wert $32f_Z(1/f_B - \Delta T_B)$ und damit also der Wert 16\,416 einzuspeichern. Selbstverständlich sind alle diese Werte in Binärform in die Register 16 bis 24 einzuspeichern, so dass die Register 16 bis 24 also auf folgende Werte zu setzen sind:

RG16: 00011100;
RG17: 0000000010010001;
RG18: 0000001010001010;
RG19: 0100001101001111;
RG20: 0100000001100000;
RG21: 0000001001000000;
RG22: 0000000001000000;
RG23: 0011;
RG24: 10000000100000.

Soll nun der Monitor mit der besagten Signalquelle verbunden werden, deren Parameter oben angegeben sind, so wird ein entsprechender Befehl in die Betätigungsmittel 37 eingegeben, die daraufhin über die Steuerleitung 51 den Anschluss der 5 Adern der von der Zentrale 52 zu dem Monitor 1 führenden Verbindungsleitung 36 im Videoverteiler 33 an die 5 Adern des innerhalb des Blokkes 33 mit „2" bezeichneten zweiten Kanals 38 bewirkt, dem im Frequenzumsetzer 44 die Signale der besagten Signalquelle zugeführt werden. Gleichzeitig veranlassen die Betätigungsmittel 37 über die Steuerleitung 47, dass der oben erwähnte, im Speicher 46 enthaltene Videoverteiler die Steuerleitung 48 des Monitors 1 mit dem Registerausgang von demjenigen der ebenfalls oben erwähnten, im Speicher 46 enthaltenen N Schieberegister verbindet, das der besagten ausgewählten Signalquelle zugeordnet ist und die vorstehenden, in die Register 16 bis 24 einzuspeichernden Werte in Form von neun aufeinanderfolgenden, seriell eingespeicherten 16stelligen Wörtern enthält und in dem diese neun Wörter durch den gleichfalls oben genannten, im Speicher 46 enthaltenen, fest an das Schieberegister angeschlossenen Taktgeber von 100 kHz Taktimpulsfrequenz ständig im Umlauf gehalten werden und Stelle für Stelle nacheinander am Schieberegisterausgang erscheinen und über den besagten, im Speicher 46 enthaltenen Videoverteiler und die Steuerleitung 48 an die im Monitor 1 vorgesehenen Adressdecodiermittel 27 weitergeleitet werden. Es ist in diesem Zusammenhang zu erwähnen, dass der in das Register 16 einzuspeichernde 8stellige Binärwert und der in das Register 23 einzuspeichernde 4stellige Binärwert in dem im Speicher 46 enthaltenen Schieberegister ebenso wie die in die anderen Register 17 bis 22 und 24 einzuspeichernden Werte als 16stellige Binärwerte gespeichert sind (also RG16: 0000000000011100 und RG23: 0000000000000011), dass also die Wortlänge bei allen in das Schieberegister eingespeicherten neun Wörtern gleich gross ist. Das ergibt sich im vorliegenden Fall daraus, dass an den im Speicher 46 enthaltenen Taktgeber die oben erwähnte Zählschaltung für die Wortlänge angeschlossen ist, die jeweils nach Ausgabe des letzten Zeichens jedes Wortes am Schieberegisterausgang an die Taktimpulsleitung 53 einen Negativimpuls zur Steuerung der im Monitor 1 vorgesehenen Adressdecodiermittel 27 abgibt, weil diese Zählschaltung nur bei gleicher Wortlänge aller im Schieberegister gespeicherten Wörter auf einen bestimmten, den Zähler der Zählschaltung auf Null stellenden Endstand eingestellt werden kann, während bei unterschiedlicher Wortlänge im Prinzip jedem Wort noch eine der Zählschaltung zu übermittelnde Information über die Wortlänge mitgegeben werden müsste und das natürlich einen erheblichen Mehraufwand sowohl schaltungstechnischer Hinsicht als auch hinsichtlich der erforderlichen Speicherkapazität der Schieberegister bedingen würde. Alternativ anstelle der Speicherung der Registerwerte für die Register 16 und 23 im Schieberegister in Form von je einem 16stelligen Binärwert können diese beiden Registerwerte auch in Form eines einzigen 16stelligen Binärwertes im Schieberegister gespeichert sein, wobei dann z.B. in den unteren 8 Stellen desselben der Registerwert für das Register 16 und in den obersten 4 Stellen desselben der Registerwert für das Register 23 enthalten sein könnte und die Register 16 und 23 im Monitor 1 an die entsprechenden Adern der gemeinsamen Datenleitung 25 anzuschliessen wären, und in diesem Falle wären in dem Schieberegister dann anstelle von neun nur noch acht Wörter enthalten, womit sich eine Verringerung der erforderlichen Speicherkapazität von 11% ergeben würde. Eine weitere Reduktion der erforderlichen Speicherkapazität um 25% liesse sich dadurch erreichen, dass anstelle von Registerwerten mit 16 Binärstellen Registerwerte mit nur 12 Binärstellen verwendet werden und entsprechend auch die Register 17 bis 22 und 24 im Monitor 1 nur 12stellige Register sind. Dadurch würden lediglich die erwähnten Verstärkungsfaktoren $V_a$ und $V_b$ ein wenig ungenauer, was aber an dem von der Bildröhre 6 dargestellten Bild praktisch nicht ersichtlich wäre.

Mit der Verbindung der Steuerleitung 48 durch den im Speicher 46 enthaltenen Videoverteiler mit dem Registerausgang des der ausgewählten Signalquelle zugeordneten Schieberegisters im Speicher 46 werden nun den in Fig. 4 im einzelnen dargestellten Adressdecodiermitteln 27 im Monitor 1 über die Steuerleitung 48 nacheinander die einzelnen, in diesem Schieberegister gespeicherten Wörter jeweils Stelle für Stelle zugeführt und in das innerhalb der Adressdecodiermittel 27 vorgesehene Schieberegister 70 mit einer der Stellenzahl eines Wortes entsprechenden Stufenzahl eingeschoben. Das schrittweise Weiterschieben im Schieberegister 70 erfolgt durch die dem Schieberegister 70 über die Taktimpulsleitung 53 von dem im Speicher 46 enthaltenen Taktgeber zugeführten Taktimpulse. Sobald ein volles Wort im Schieberegister 70 steht, trifft auf der Taktimpulsleitung 53 bei den Adressdecodiermitteln 27 der oben erwähnte Negativimpuls ein, der jeweils nach Ausgabe des letzten Zeichens jedes Wortes am Schieberegisterausgang im Speicher 46 von der erwähnten, an den Taktgeber angeschlossenen Zählschaltung an die Taktimpulsleitung 53 abgegeben wird. Dieser Negativimpuls wird über die an die Taktimpulsleitung 53 angeschlossene Steuerleitung 71 der Erkennungsschaltung 72 zugeführt, die z.B. von einem nur bei Negativimpulsen öffnenden und bei den positiven Taktimpulsen geschlossen bleibenden Transistor oder von einem nur Negativimpulse durchlassenden Gleichrichter gebildet ist und mit dem Eintreffen des Negativimpulses an ihrem Eingang ausgangsseitig über die Steuerleitung 73 an die UND-Schaltungen 74 ein Durchschaltsignal abgibt. In diesem Zusammenhang ist darauf hinzuweisen, dass jedes Wort ausser dem in das jeweils zugeordnete Register einzuspeichernden Registerwert in Form eines 16stelligen Binärwertes noch eine das zugeordnete Register angebende Adresse in Form eines dem 16stelligen Binärwert vorangehenden 4stelligen Binärwertes enthält und das Schieberegister 70 dementsprechend einen 16 Stufen umfassenden Datenteil 75 und einen 4 Stufen umfassenden Adressteil 76 und somit insgesamt eine der Wortlänge von 20 Stellen entsprechende Anzahl von 20 Stufen hat. Sobald nun ein volles Wort im Schieberegister 70 steht, steht im Adressteil 76 des Schieberegisters 70 die Adresse bzw. das zugeordnete Register für den im Datenteil 75 des Schieberegisters 70 stehenden nun damit gleichzeitig über die gemeinsame Datenleitung 25 an jedem der Register 16 bis 24 anliegenden Registerwert. Diese im Adressteil 76 des Schieberegisters 70 in Form eines 4stelligen Binärwertes stehende Adresse liegt am Eingang der Decodiermatrix 77, die ebenso wie die von Rechenwerken allgemein bekannte Decodiermatrix zur Umwandlung eines 4stelligen Binärwertes in eine dekadische Ziffer ausgebildet ist und den an ihrem Eingang stehenden 4stelligen Binärwert in eine entsprechende dekadische Ziffer umwandelt und an den dieser dekadischen Ziffer entsprechenden Ausgang von ihren neun Ausgängen für die Ziffern 1 bis 9 ein Schaltsignal bzw. eine binäre „1" abgibt. An die neun Ausgänge der Decodiermatrix 77 sind über die UND-Schaltungen 74 die Steuerleitungen 26 angeschlossen, von denen jede über die gemeinsame Datenleitung 25 zum Setzeingang von einem der Register 16 bis 24 führt. Wird nun nach Eintreffen des besagten Negativimpulses bei den Adressdecodiermitteln 27 von der genannten Erkennungsschaltung 72 an die UND-Schaltungen 74 das erwähnte Durchschaltsignal abgegeben, dann werden die Ausgänge der Decodiermatrix 77 mit den Steuerleitungen 26 und damit über die gemeinsame Datenleitung 25 mit den Setzeingängen der Register 16 bis 24 verbunden, so dass mit der Durchschaltung der UND-Schaltungen 74 an den Setzeingang desjenigen der Register 16 bis 24, dessen Adresse im Adressteil 76 des Schieberegisters 70 steht und dessen Steuerleitung 26 somit mit dem eine binäre „1" abgebenden Ausgang der Decodiermatrix 77 verbunden ist, ein Setzimpuls abgegeben wird, der die Einspeicherung des über die gemeinsame Datenleitung 25 an dem Register anliegenden zugeordneten Registerwertes in das Register bewirkt. Auf diese Weise werden in die Register 16 bis 24 vom Moment der Auswahl der Signalquelle durch die Betätigungsmittel 37 und der dadurch bewirkten Verbindung der Steuerleitung 48 mit dem Registerausgang des der ausgewählten Signalquelle zugeordneten Schieberegisters im Speicher 46 an nacheinander die zugeordneten Registerwerte eingespeichert, wobei diese Einspeicherung bei demjenigen der Register 16 bis 24 beginnt, dessen zugeordneter Registerwert nach der Auswahl der Signalquelle als erster in den Adressdecodiermitteln 27 einläuft, und nach etwa einem Umlauf der Wörter in dem der ausgewählten Signalquelle zugeordneten Schieberegister im Speicher 46 bei allen Registern 16 bis 24 beendet ist. Da für einen Umlauf der Wörter in dem Schieberegister im Speicher 46 etwa 200 Taktimpulse benötigt werden und der Taktgeber wie oben erwähnt eine Taktimpulsfrequenz von 100 kHz hat, dauert die Einstellung der Register 16 bis 24 auf die entsprechenden, der ausgewählten Signalquelle zugeordneten Registerwerte insgesamt nur ca. 2 msec und damit nur einen Bruchteil der bei der Folgefrequenz der den Bildwechsel steuernden Synchronisationssignale von 33⅓ Hz für einen Bildwechsel erforderlichen Zeit von 30 msec, so dass die Einstellung der Register 16 bis 24 in aller Regel in die Zeitspanne zwischen zwei Bildwechseln fällt. Das entsprechende, in diese Zeitspanne fallende Bild fällt damit aus, was aber keine Rolle spielt, weil erstens ein einzelnes Bild in einer Bildfolge mit der Folgefrequenz 33⅓ Hz vom Auge sowieso nicht wahrnehmbar ist und zweitens bei einer Neuauswahl der Signalquelle ja ohnehin eine gewollte Bildänderung erfolgt und daher das letzte Bild der zuvor eingestellten Signalquelle nicht mehr von Interesse ist. Eine Beschreibung der Vorgänge innerhalb dieser Zeitspanne zwischen zwei Bildwechseln, in die die Einstellung der Register 16 bis 24 fällt, erübrigt sich daher, so dass bei der folgenden Beschreibung der Wirkungsweise der beiden, in den Figuren 2 und 3 dargestellten Generatoren 7 und 9 zur Erzeugung der Steuergrössen für die Strahlablenkung in Zeilenrichtung und senkrecht zur Zeilenrichtung vom Beginn der Aufzeichnung eines neuen Bildes bzw. vom Zeitpunkt des Auftretens des diese Aufzeichnung einleitenden Bildwechsel-Synchronisationssignals ausgegangen werden kann.

Das zu Beginn der ersten Bildzeile jedes Gesamtbildes gleichzeitig mit dem den Bildwechsel steuernden Synchronisationssignal 40 auftretende, den Bildzeilenwechsel steuernde Synchronisationssignal 41 wird ebenso wie das den Bildwechsel steuernde Synchronisationssignal 40 in den der ausgewählten Signalquelle zugeordneten Signalverarbeitungsmitteln 39 aus den denselben über den der ausgewählten Signalquelle zugeordneten Kanal 38 zugeführten Signalen der ausgewählten Signalquelle gewonnen und über den Videoverteiler 33 und die Verbindungsleitung 36 zwischen der Zentrale 52 und dem Monitor 1 sowie die im Monitor 1 vorgesehene Steuerleitung 78 dem in Fig. 2 im einzelnen dargestellten ersten Generator 7 zur Erzeugung der ersten Steuergrösse 8 für die Strahlablenkung in Zeilenrichtung zugeführt und innerhalb des ersten Generators 7 über die Steuerleitung 79 und die ODER-Schaltung 80 dem Setzeingang des Zählers 81 und über die Steuerleitung 82 dem Flip-Flop 83 zugeleitet. Das dem Setzeingang des Zählers 81 zugeleitete Bildzeilenwechsel-Synchronisationssignal bewirkt, dass der Zähler 81 auf den im Register 17 stehenden Registerwert „145" gesetzt wird. Gleichzeitig bewirkt das auch dem Flip-Flop 83 zugeleitete Bildzeilenwechsel-Synchronisationssignal, dass das Flip-Flop 83 auf „1" gesetzt wird und damit über die Steuerleitung 84 an die UND-Schaltung 85 ein Durchschaltsignal abgibt, durch das der Ausgang 69 des von dem Zähler 67 und dem Vergleicher 68 sowie dem Register 16 gebildeten Frequenzteilers über die UND-Schaltung 85 mit dem Zähleingang des Zählers 81 verbunden wird. Da im Register 16 der Registerwert „28" steht, gibt der Vergleicher 68 jeweils dann, wenn im Zähler 67 ebenfalls der Wert „28" steht, an den Ausgang 69 einen Impuls ab und setzt gleichzeitig den Zähler 67 wieder auf Null, von wo aus der Zähler 67 von neuem beginnt, die Ausgangssignale des Impulsgenerators 66 zu zählen, so dass also im Prinzip jeder 28-te Ausgangsimpuls des Impulsgenerators 66 an den Ausgang 69 des von dem Zähler 67 und dem Vergleicher 68 sowie dem Register 16 gebildeten Frequenzteilers mit dem Frequenzteilerverhältnis 1:q = 1:28 weitergegeben wird. Die Ausgangsimpulse am Frequenzteilerausgang 69 werden über die UND-Schaltung 85 sowie die Steuerleitung 86 dem Zähleingang des Zählers 81 zugeleitet, dessen Zählerstand bei jedem an seinem Zähleingang eingehenden Impuls ausgehend von seinem Setzwert „145" um eine Zähleinheit erhöht wird. Der jeweilige Zählerstand des Zählers 81 wird über die Steuerleitungen 87 dem Eingang des Digital-Analog-Wandlers 60 zugeführt, der an seinem Ausgang 58 als Steuergrösse 64 einen diesem Zählerstand mit den oben schon erwähnten Proportionalitätsfaktor „g" entsprechenden Analogwert abgibt, der nach Verstärkung mit dem erwähnten Verstärkungsfaktor $V_a = 17231/1024 = 16,82715$ durch den einstellbaren Verstärker 54 die vom dem ersten Generator 7 abgegebene erste Steuergrösse 8 für die Strahlablenkung in Zeilenrichtung bildet. Sobald der Zählerstand des Zählers 81 den im Register 18 stehenden Registerwert „650" erreicht hat, gibt der Vergleicher 88 einen Ausgangsimpuls ab, der über die Steuerleitung 89 dem Flip-Flop 83 zugeleitet wird und die Rücksetzung desselben auf „0" und damit die Beendigung des von dem Flip-Flop 83 an die UND-Schaltung 85 abgegebenen Durchschaltsignals und damit schliesslich die Sperrung der UND-Schaltung 85 bewirkt und der weiter über die an die Steuerleitung 89 angeschlossene Steuerleitung 90 und die ODER-Schaltung 80 dem Setzeingang des Zählers 81 zugeleitet wird und damit die Rücksetzung des Zählers 81 auf den im Register 17 stehenden Registerwert „145" bewirkt und der ferner über die an die Steuerleitung 89 angeschlossene Steuerleitung 91 dem zur Erzeugung der zweiten Steuergrösse 10 für die Strahlablenkung senkrecht zur Zeilenrichtung vorgesehenen zweiten Generator 9 und innerhalb desselben dem Flip-Flop 92 zugeleitet wird und dieses auf „1" setzt und damit zur Abgabe eines Durchschaltsignals an die UND-Schaltung 93 veranlasst und der schliesslich über die an die Steuerleitung 89 angeschlossene Steuerleitung 91 und die an diese angeschlossene Steuerleitung 94 den Austastmitteln 32 zur Strahlaustastung während des Strahlrücklaufes zwischen aufeinanderfolgenden Bildzeilen und zwischen aufeinanderfolgenden Bildern und innerhalb derselben dem Flip-Flop 95 zugeleitet wird und diese auf „1" setzt und damit zur Abgabe eines Austastsignals veranlasst, das über die ODER-Schaltung 96 und den Verstärker 97 dem Austasteingang 98 der Bildröhre 6 zugeführt wird und die Strahlaustastung während des Strahlrücklaufes zwischen aufeinanderfolgenden Bildzeilen bewirkt. Die Strahlaustastung wird mit dem Einlaufen eines neuen Bildzeilenwechsel-Synchronisationssignals 41 über die Verbindungsleitung 36 in den Monitor 1 und der Zuleitung dieses Signals über die Steuerleitung 99 zu dem Flip-Flop 95 beendet, da das Flip-Flop 95 von diesem Signal auf „0" gesetzt wird und damit die Abgabe des genannten Austastsignals beendet. Mit dem Einlaufen dieses und jedes weiteren Bildzeilenwechsel-Synchronisationssignals über die Steuerleitung 78 in den ersten Generator 7 beginnt sich dann der zuvor beschriebene Vorgang der Erzeugung der ersten Steuergrösse 8 für die Strahlablenkung in Zeilenrichtung zu wiederholen.

Zu Beginn der ersten Bildzeile jedes Gesamtbildes läuft ausserdem über die Verbindungsleitung 36 in dem Monitor 1 auch das oben schon erwähnte, den Bildwechsel steuernde Synchronisationssignal 40 ein. Dieses Bildwechsel-Synchro-

nisationssignal 40 wird über die Steuerleitung 100 dem in Fig. 3 im einzelnen dargestellten zweiten Generator 9 zur Erzeugung der zweiten Steuergrösse 10 für die Strahlablenkung senkrecht zur Zeilenrichtung zugeführt und innerhalb des zweiten Generators 9 über die Steuerleitung 101 und die ODER-Schaltungen 102, 103 und 104 den Setzeingängen der Zähler 105, 106 und 107 zugeleitet. Das den Setzeingängen der Zähler 105, 106 und 107 zugeleitete Bildwechsel-Synchronisationssignal bewirkt, dass der Zähler 107 auf Null und die Zähler 105 und 106 auf den im Register 22 stehenden Registerwert „64" gesetzt werden. Der Zählerstand des Zählers 106 wird über die Steuerleitungen 108 dem Eingang des Digital-Analog-Wandlers 63 zugeführt, der an seinem Ausgang 61 als Steuergrösse 65 einen diesem Zählerstand mit dem oben schon erwähnten Proportionalitätsfaktor „g" entsprechenden Analogwert abgibt, der nach Verstärkung mit dem erwähnten Verstärkungsfaktor $V_b = 16480/1024 = 16,09375$ durch den einstellbaren Verstärker 56 die von dem zweiten Generator 9 abgegebene zweite Steuergrösse 10 für die Strahlablenkung senkrecht zur Zeilenrichtung bildet. Diese zweite Steuergrösse 10 ist bei dem anfänglichen Zählerstand „64" des Zählers 106 gerade so gross, dass von dem Strahl in der Bildröhre 6 die am oberen Bildrand des Bildfeldes derselben befindliche erste Zeile geschrieben wird, und erhöht sich mit jeder Erhöhung des Zählerstandes des Zählers 106 um eine Zähleinheit um einen einer Strahlablenkung senkrecht zur Zeilenrichtung von einem Zeilenabstand entsprechenden Betrag, so dass also bei einem Zählerstand „x" des Zählers 106 im Bildfeld der Bildröhre 6 von dem Strahl die $(x-63)$-te Zeile geschrieben wird. Wenn nun nach Beendigung des Schreibens der ersten Bildzeile von dem Vergleicher 80 im ersten Generator 7 (Fig. 2) der oben schon erwähnte Ausgangsimpuls abgegeben wird, der über die Steuerleitungen 89, 91 und 94 die Strahlaustastung während des Strahlrücklaufes zwischen aufeinanderfolgenden Bildzeilen einleitet und u.a. über die Steuerleitungen 89 und 91 auch dem Flip-Flop 92 im zweiten Generator 9 zugeleitet wird und dieses auf „1" setzt und damit zur Abgabe eines Durchschaltsignals an die UND-Schaltung 93 veranlasst, werden nach der damit erfolgten Durchschaltung der UND-Schaltung 93 den Zähleingängen der Zähler 106 und 109 über die Steuerleitung 110 und die UND-Schaltung 93 sowie die Steuerleitungen 111 bzw. 112 die Ausgangsimpulse des Impulsgenerators 66 zugeleitet. Der Zähler 109 zählt die über die Steuerleitung 112 an seinem Zähleingang einlaufenden Impulse, bis im Zähler 109 der gleiche Wert wie im Register 23 steht, also bis zum Wert „3", der dem im Register 23 stehenden, die Teilbildzahl k = 3 angebenden Registerwert „3" entspricht. Sobald im Zähler 109 der gleiche Wert „3" wie im Register 23 steht, gibt der Vergleicher 113 ein Ausgangssignal ab, das über die Steuerleitung 114 dem Flip-Flop 92 zugeleitet wird und die Rücksetzung desselben auf „0" und damit die Beendigung des von dem Flip-Flop 92 an die UND-Schaltung 93 abgegebenen Durchschaltsignals und damit schliesslich die Sperrung der UND-Schaltung 93 bewirkt und gleichzeitig auch den Zähler 109 wieder auf Null setzt. Dem Zähleingang des Zählers 106 wird dementsprechend während der Durchschaltung der UND-Schaltung 93 über die Steuerleitung 111 eine der Teilbildzahl k = 3 entsprechende Anzahl von 3 Impulsen zugeführt, so dass der Zählerstand „x" des Zählers 106 danach gleich x = 64 + 3 = 67 ist und dementsprechend im Bildfeld der Bildröhre 6 von dem Strahl als nächste Bildzeile die $(x-63)$-te = $(67-63)$-te = 4-te Bildzeile geschrieben wird. Der gleiche Vorgang wiederholt sich mit jedem nach dem Schreiben einer Bildzeile von dem Vergleicher 88 im ersten Generator 7 (Fig. 2) abgegebenen Ausgangsimpuls, so dass sich also der Zählerstand des Zählers 106 ausgehend von seinem Setzwert „64" nach jeder Bildzeile um einen der Teilbildzahl k = 3 entsprechenden Betrag von 3 Zähleinheiten auf „67", „70", „73", ..., „568", „571", „574" erhöht und entsprechend im Bildfeld der Bildröhre 6 von dem Strahl nacheinander die 1., 4., 7., ..., 505., 508., 511. Bildzeile des Gesamtbildes geschrieben wird. Danach wiederholt sich zwar der gleiche Vorgang nochmals, jedoch erreicht der Zählerstand des Zählers 106 während dieses Vorgangs schon nach dem zweiten, dem Zähleingang desselben über die Steuerleitung 111 zugeführten Impuls den Wert „576", bei dem im Zähler 106 der gleiche Wert wie im Register 21 steht und der Vergleicher 115 daher ein Ausgangssignal abgibt, das über die Steuerleitungen 116, 117 und 118 dem Zähleingang des Zählers 105 zugeleitet wird und den Zählerstand „64" des Zählers 105 um eine Zähleinheit auf den Wert „65" erhöht und das weiter über die Steuerleitung 116 dem Flip-Flop 119 zugeleitet wird und dieses auf „1" setzt und damit zur Abgabe eines Durchschaltsignals an die UND-Schaltung 120 veranlasst und das schliesslich über die Steuerleitungen 116, 117 und 121 dem Zähleingang des Zählers 107 zugeleitet wird und den Zählerstand des Zählers 107 von „0" auf „1" erhöht. Von dem dritten der drei der Steuerleitung 111 von der UND-Schaltung 93 zugeführten Impulse, der über die an die Steuerleitung 111 angeschlossene Steuerleitung 122 und die ODER-Schaltung 123 sowie die von dem Flip-Flop 119 durchgeschaltete UND-Schaltung 120 und die ODER-Schaltung 103 dem Setzeingang des Zählers 106 und ausserdem über die Steuerleitung 124 auch dem Flip-Flop 119 zugeleitet wird, wird dann der Zähler 106 auf den im Zähler 105 stehenden Wert „65" gesetzt und das Flip-Flop 119 wieder auf „0" zurückgesetzt und damit die Durchschaltung der UND-Schaltung 120 beendet. Mit dieser Rücksetzung des Zählers 106 von zuvor „574" auf den Wert „65" beginnt der gesamt zuvor beschriebene Zyklus der Erhöhung des Zählerstandes des Zählers 106 nach jeder Bildzeile um 3 Zähleinheiten von neuem, so dass sich also der Zählerstand des Zählers 106 ausgehend von seinem neuen Setzwert „65" nach jeder Bildzeile um 3 Zähleinheiten auf „68", „71", „74", ..., „569", „572", „575" erhöht und entsprechend im Bildfeld der Bildröhre 6 nacheinander die

2., 5., 8., ..., 506., 509., 512. Bildzeile des Gesamtbildes geschrieben wird. Nach dem Schreiben der 512. Bildzeile werden von der UND-Schaltung 93 wiederum 3 Impulse des Impulsgenerators 66 durchgelassen, von denen jedoch schon der erste den Zählerstand des Zählers 106 auf den Wert „576" erhöht, bei dem im Zähler 106 der gleiche Wert wie im Register 21 steht und der Vergleicher 115 daher wiederum ein Ausgangssignal abgibt, das wiederum eine Erhöhung des Zählerstandes des Zählers 105 um eine Zähleinheit auf den Wert „66" und eine Durchschaltung der UND-Schaltung 120 durch Umstellung des Flip-Flops 119 auf „1" sowie eine Erhöhung des Zählerstandes des Zählers 107 um eine Zähleinheit auf den Wert „2" bewirkt. Von dem zweiten der drei von der UND-Schaltung 93 durchgelassenen Impulse wird dann wiederum der Zähler 106 auf den im Zähler 105 stehenden Wert „66" gesetzt und durch Rücksetzung des Flip-Flops 119 auf „0" die Durchschaltung der UND-Schaltung 120 beendet. Mit dieser Rücksetzung des Zählers 106 von zuvor „575" auf „66" beginnt ein weiterer Zyklus der Erhöhung des Zählerstandes des Zählers 106 nach jeder Bildzeile um 3 Zähleinheiten, so dass sich also der Zählerstand des Zählers 106 ausgehend von seinem neuen Setzwert „66" nach jeder Bildzeile um 3 Zähleinheiten auf „69", „72", „75", ..., „570", „573", „576" erhöht und entsprechend im Bildfeld der Bildröhre nacheinander die 3., 6., 9., ..., 507., 510. Bildzeile des Gesamtbildes, jedoch nicht mehr eine 513. Bildzeile, geschrieben werden, weil der Zählerstand des Zählers 106 nach der 510. Bildzeile von dem Wert „573" auf den Wert „576" erhöht wird und damit schon im Zähler 106 der gleiche Wert wie im Register 21 steht und der Vergleicher 115 infolgedessen schon nach der 510. Bildzeile ein Ausgangssignal abgibt, das wiederum zunächst eine Erhöhung des Zählerstandes des Zählers 105 um eine Zähleinheit auf den Wert „67" und eine Durchschaltung der UND-Schaltung 120 durch Umstellung des Flip-Flops 119 auf „1" sowie eine Erhöhung des Zählerstandes des Zählers 107 um eine Zähleinheit auf den Wert „3" bewirkt, dann aber mit dieser Erhöhung des Zählerstandes des Zählers 107 auf den Wert „3" eine Rückstellung der Zähler 105, 106 und 107 auf ihre ursprünglichen Ausgangswerte bei Beginn der ersten Bildzeile des betreffenden Gesamtbildes auslöst. Denn sobald der Zählerstand des Zählers 107 den Wert „3" erreicht und damit im Zähler 107 der gleiche Wert wie im Register 23 steht, gibt der Vergleicher 125 einen Ausgangsimpuls ab, der über die Steuerleitungen 126 und 127 sowie die ODER-Schaltung 102 dem Setzeingang des Zählers 105 zugeleitet wird und den Zähler 105 auf den im Register 22 stehenden Wert „64" setzt und damit auch die Rücksetzung des Zählers 106 auf den im Register 22 stehenden Wert „64" vorbereitet und der weiter über die Steuerleitung 126 und die ODER-Schaltung 104 dem Setzeingang des Zählers 107 zugeleitet wird und den Zähler 107 auf Null setzt und der schliesslich über die Steuerleitung 128 dem Flip-Flop 129 zugeleitet wird und dasselbe auf „1" setzt und damit zur Abgabe eines Ausgangssignals an die Steuerleitung 130 veranlasst. Die Rücksetzung des Zählers 106 auf den im Register 22 stehenden Wert „64" erfolgt dann mit dem anschliessend über die Steuerleitung 131 einlaufenden Bildzeilenwechsel-Synchronisationssignal 41, das über die Steuerleitung 131 und die ODER-Schaltung 123 sowie die von dem Flip-Flop 119 durchgeschaltete UND-Schaltung 120 und die ODER-Schaltung 103 dem Setzeingang des Zählers 106 und ausserdem über die Steuerleitung 124 auch dem Flip-Flop 119 zugeleitet wird und durch das der Zähler 106 auf den im Zähler 105 stehenden Wert „64" und damit gleichzeitig auf den Registerwert des Registers 22 und das Flip-Flop 119 auf „0" gesetzt wird und damit auch die Durchschaltung der UND-Schaltung 120 beendet wird. Das von dem Flip-Flop 129 vom Einlaufen des Ausgangsimpulses des Vergleichers 125 an abgegebene Ausgangssignal wird über die Steuerleitung 130 den Austastmitteln 32 zur Strahlaustastung während des Strahlrücklaufes zwischen aufeinanderfolgenden Bildzeilen und zwischen aufeinanderfolgenden Bildern und innerhalb desselben dem Flip-Flop 132 zugeleitet und setzt dieses auf „1" und veranlasst es damit zur Abgabe eines Austastsignals, das über die ODER-Schaltung 96 und den Verstärker 97 dem Austasteingang der Bildröhre 6 zugeführt wird und die Strahlaustastung während des Strahlrücklaufes zwischen aufeinanderfolgenden Bildern bewirkt. Diese Strahlaustastung wird mit dem Einlaufen eines neuen Bildwechsel-Synchronisationssignals 40 über die Verbindungsleitung 36 in den Monitor 1 und der Zuleitung dieses Signals über die Steuerleitung 133 zu dem Flip-Flop 132 beendet, da das Flip-Flop 132 von diesem Signal auf „0" gesetzt wird und damit die Abgabe des genannten Austastsignals beendet. Gleichzeitig setzt dieses neue Bildwechsel-Synchronisationssignal 40 über die Steuerleitungen 100 und 134 auch das Flip-Flop 129 im zweiten Generator 9 wieder auf „0". Mit dem Einlaufen dieses und jedes weiteren neuen Bildwechsel-Synchronisationssignals über die Steuerleitung 100 in den zweiten Generator 9 beginnt sich dann der zuvor beschriebene Ablauf der Erzeugung der zweiten Steuergrösse 10 für die Strahlablenkung senkrecht zur Zeilenrichtung zu wiederholen.

Es ist abschliessend darauf hinzuweisen, dass bei dem oben beschriebenen Ausführungsbeispiel einer Bildempfangsanlage nach der Erfindung für den inneren Aufbau der einzelnen Blöcke schon aus verfahrensökonomischen Gründen jeweils nur eines oder einige wenige von einer Vielzahl von möglichen Beispielen angegeben werden konnte und dass demgemäss die verschiedenen Blöcke bei dem in Fig. 1 gezeigten Blockschema der vorliegenden Bildempfangsanlage natürlich im einzelnen auch anders als oben nur beispielhaft angegeben aufgebaut sein können. So können insbesondere die im Block 44 in Fig. 1 gestrichelt angedeuteten, den einzelnen Signalquellen zugeordneten Teile des Blockes 44 anstelle von Frequenzumsetzungsmitteln auch andere Umsetzungsmittel zur Umsetzung der empfangenen Signale in ein dem zugeordneten Kanal 38 zuzuführendes Video-Signal wie z.B. Computer enthalten, denen über Datenleitungen von relativ geringer Bandbreite von der zugeordneten Signalquelle stammende Daten zugeleitet werden und die aus diesen Daten gegebenenfalls unter Zuhilfenahme eines im Computer fest eingespeicherten Musters ein stehendes Video-Bild erzeugen, bei dem dann durch die über die zugeordnete Datenleitung einlaufenden Daten nur noch Korrekturen bzw. Änderungen an einzelnen Bildstellen bewirkt werden (wie z.B. eine Wechselkursliste, bei der die Börsenorte und die Währungen Teile des fest im Computer gespeicherten Musters sind und nur an den entsprechenden Bildstellen die Wechselkurse selbst eingetragen werden und durch die über die zugeordnete Datenleitung einlaufenden Daten z.B. nur Kursänderungen übertragen werden). Ferner könnten eine oder mehrere der genannten gestrichelt angedeuteten Teile des Blockes 44 auch die Signalquelle selbst enthalten, z.B. dann, wenn es sich bei dieser Signalquelle um einen hauseigenen Computer handelt, dessen Video-Bilder ebenfalls von den M Monitoren empfangbar sein sollen. Des weiteren können die Betätigungsmittel 37 im einfachsten Fall nur aus einem oder mehreren einpoligen Schaltern bestehen. Ferner kann der Speicher 46 als Speichermittel rein analoge Speichermittel wie z.B. ohmsche Widerstände oder Spannungsteiler mit den zu speichernden Stellwerten entsprechenden Widerstandswerten bzw. Teilverhältnissen enthalten, wobei dann jede der zu den einzelnen Monitoren führenden Steuerleitungen 48 neun Adern für die neun Register 16 bis 24 haben müsste und auch der im Speicher 46 enthaltene Verteiler N Leitungsgruppen zu je neun Adern für die N den einzelnen Signalquellen zugeordneten Speichermittel und M Leitungsgruppen zu je neun Adern für die zu den M Monitoren führenden M Steuerleitungen 48 aufweisen müsste. Der Block 27 würde in diesem Fall nur Verbindungen zwischen den neun Adern der Steuerleitung 48 und den neun zu den einzelnen Registern 16 bis 24 führenden Steuerleitungen 26 enthalten, und die gemeinsame Datenleitung 25 würde nur diese neun Steuerleitungen 26 umfassen. Die Register 16 bis 24 könnten in diesem Fall an die die Speichermittel bildenden Spannungsteiler angeschlossene Kondensatoren oder auch nur reine Widerstände zur Umwandlung der über die die Speichermittel bildenden ohmschen Widerstände sowie die Steuerleitungen 48 und 26 angelieferten Ströme in Spannungen sein. Anstelle der Blöcke 46, 27 und 16 bis 24 könnten bei Verwendung von analogen Speichermitteln aber einfacher die Speichermittel für alle N Signalquellen unmittelbar in jedem einzelnen Monitor vorgesehen sein und gegebenenfalls an die Stelle der Register 16 bis 24 treten. Schliesslich kann natürlich auch der erste Generator 7 zur Erzeugung der ersten Steuergrösse 8 für die Strahlablenkung in Zeilenrichtung ohne weiteres ein analoger Kippspannungsgenerator mit veränderbarer Amplitude und veränderbarer Kippfrequenz und der zweite Generator 9 zur Erzeugung der zweiten Steuergrösse 10 für die Strahlablenkung senkrecht zur Zeilenrichtung ein analoger Treppenspannungsgenerator mit veränderbarer Stufenzahl, Stufenhöhe und Stufenbreite bzw. Stufendauer oder ebenfalls ein analoger Kippspannungsgenerator mit veränderbarer Amplitude und veränderbarer Kippfrequenz sein. Und in dieser Weise liesse sich die Anzahl der Beispiele für allein schon im Rahmen des Blockschemas in Fig. 1 gegebene Variationsmöglichkeiten noch beliebig erweitern, wobei die Variationsmöglichkeiten der Erfindung, die im Rahmen des oben näher erörterten Konzepts für einen sich selbsttätig an das Videosystem der gerade empfangenen Signalquelle anpassenden Monitor gegeben sind, noch nicht einmal berücksichtigt sind. Es ist daher zusammenfassend festzustellen, dass es neben dem oben beschriebenen Ausführungsbeispiel noch eine Vielzahl anderer, im Rahmen der Erfindung liegender Ausführungsbeispiele gibt und das obige Ausführungsbeispiel daher unter keinen Umständen in einem die Erfindung beschränkenden Sinne zu werten ist.

## Patentansprüche

1. Bildempfangsanlage zum Empfang von Video-Bildern, die von N verschiedenen Signalquellen mit mindestens zum Teil unterschiedlichen Signalparametern aus der die Parameter „Folgefrequenz $f_B$ von den Bildwechsel steuernden Synchronisationssignalen", „Dauer $\Delta T_B$ des Zeitintervalls zwischen zwei aufeinanderfolgenden Bildern", „Folgefrequenz $f_Z$ von den Bildzeilenwechsel steuernden Synchronisationssignalen", „Dauer $\Delta T_Z$ des Zeitintervalls zwischen zwei aufeinanderfolgenden Bildzeilen", „Folgefrequenz $f_P$ von die einzelnen Bildpunkte steuernden Bildpunktsignalen", „Dauer $\Delta T_P$ des Zeitintervalls zwischen zwei aufeinanderfolgenden Bildpunktsignalen", „Bildschreibweise in bezug auf die Aufeinanderfolge der zur Darstellung eines Gesamtbildes dienenden z Bildzeilen in Form von k jeweils aus den $(k \cdot n + m)$-ten Bildzeilen des Gesamtbildes mit $n = 0, 1, 2, ... (\frac{z}{k} - 1)$ und $m = 1, 2, ... k$ und k eine natürliche Zahl zusammengesetzten Bildern", „Bildpunktschreibweise in bezug auf die Signalisierung der Bildpunktintensität in Analog- oder Digitalform" umfassenden Parametergruppe stammen, mit mindestens einem Monitor, der eine mit ersten Ablenkmitteln zur Strahlablenkung in Zeilenrichtung, zweiten Ablenkmitteln zur Strahlablenkung senkrecht zur Zeilenrichtung, Fokussiermitteln zur Strahlfokussierung und Mitteln zur Strahlintensitätssteuerung versehene Bildröhre mit im wesentlichen rechteckigem oder quadratischem Bildfeld, einen ersten Generator zur Erzeugung einer ersten Steuergrösse für die Strahlablenkung in Zeilenrichtung, einen zweiten Generator zur Erzeugung einer zweiten Steuergrösse für die Strahlablenkung senkrecht zur Zeilenrichtung, einen dritten Generator zur Erzeugung einer dritten Steuergrösse für die Strahlfokussierung, Verstärkungsmittel für mindestens einen Teil der Steuergrössen sowie von Signalen gesteuerte Rücksetzmittel zur Rücksetzung von mindestens einem der beiden zur Erzeugung von Steuergrössen für die Strahlablenkung dienenden Generatoren umfasst, und ferner mit Signalverarbeitungsmitteln zur Gewinnung der Synchronisationssignale sowie zur Gewinnung von mindestens einer vierten Steuergrösse für die Strahlintensitätssteuerung aus den den Signalverarbeitungsmitteln zugeführten, von einer der N Signalquellen stammenden Signalen, dadurch gekennzeichnet, dass der Monitor (1) durch den empfangenen Signalen bzw. der diese liefernden Signalquelle zugeordnete Stellgrössen, die mindestens zum Teil in der Bildempfangsanlage gespeichert oder in einer anderen Form zugriffsfähig fixiert sind, auf die Parameter der Signalquelle einstellbar ist und für jede der N Signalquellen mindestens die nicht aus den empfangenen Signalen ableitbaren Stellgrössen in der Bildempfangsanlage gespeichert sind.

2. Bildempfangsanlage nach Anspruch 1, gekennzeichnet durch erste steuerbare Stellmittel (16, 17, 18, 19) zur Einstellung des ersten Generators (7) vor dem ersten Bildpunkt jeder Bildzeile auf einen Anfangswert $a_1$ der ersten Steuergrösse (8), bei dem sich eine solche Strahlablenkung in Zeilenrichtung ergibt, dass der erste Bildpunkt jeder Bildzeile einen für die ersten Bildpunkte aller Bildzeilen jedes Gesamtbildes im wesentlichen gleichen ersten Abstand $A_1$ von einem benachbarten ersten zur Zeilenrichtung im wesentlichen senkrechten Bildrand des Bildfeldes der Bildröhre (6) hat, und ausserdem zur Einstellung des ersten Generators (7) auf einen solchen mittleren zeitlichen Anstieg der ersten Steuergrösse (8) von ihrem Anfangswert $a_1$ aus, dass die erste Steuergrösse (8) innerhalb der Signalisierungsdauer $(1/f_Z - \Delta T_Z)$ einer Bildzeile einen Endwert $a_2$ erreicht, bei dem sich eine solche Strahlablenkung in Zeilenrichtung ergibt, dass der letzte Bildpunkt jeder Bildzeile einen für die letzten Bildpunkte aller Bildzeilen jedes Gesamtbildes im wesentlichen gleichen zweiten Abstand $A_2$ von einem benachbarten zweiten zur Zeilenrichtung im wesentlichen senkrechten Bildrand des Bildfeldes der Bildröhre (6) hat, zweite steuerbare Stellmittel (20, 21, 22, 23) zur Einstellung des zweiten Generators (9) mit jedem Gesamtbildwechsel auf einen Anfangswert $b_1$ der zweiten Steuergrösse (10), bei dem sich eine solche Strahlablenkung in zur Zeilenrichtung senkrechter Richtung ergibt, dass die erste Bildzeile jedes Gesamtbildes einen über die ganze Zeilenlänge im wesentlichen gleichbleibenden dritten Abstand $B_1$ von einem benachbarten ersten im wesentlichen in Zeilenrichtung verlaufenden Bildrand des Bildfeldes der Bildröhre (6) hat, sowie zur Einstellung des zweiten Generators mit jedem der $(k-1)$ Bildwechsel, die bei der Darstellung von Gesamtbildern in Form von k jeweils aus den $(k \cdot n+m)$-ten Zeilen des Gesamtbildes zusammengesetzten Bildern bei $k \neq 1$ während der Darstellung eines jeden Gesamtbildes auftreten, auf einen Anfangswert

$$\left( b_1 + \frac{(m-1) \cdot (b_2 - b_1)}{f_Z(1/f_B - \Delta T_B) - 1} \right)$$

der zweiten Steuergrösse (10), und ausserdem zur Einstellung des zweiten Generators (9) auf eine Stufenzahl

$$\frac{f_Z}{k} \cdot (1/f_B - \Delta T_B - k/f_Z)$$

pro Bild, eine Stufenhöhe

$$\frac{k \cdot (b_2 - b_1)}{f_Z(1/f_B - \Delta T_B) - 1}$$

und eine Stufenbreite bzw. -dauer $1/f_Z$ einer in Zeitabständen $T_Z = 1/f_Z$ stufenweise ansteigenden zweiten Steuergrösse (10) bzw. auf einen solchen mittleren zeitlichen Anstieg der zweiten Steuergrösse (10) von ihrem Anfangswert

$$\left( b_1 + \frac{(m-1) \cdot (b_2 - b_1)}{f_Z(1/f_B - \Delta T_B) - 1} \right)$$

aus, dass die zweite Steuergrösse (10) innerhalb der Signalisierungsdauer

$$\frac{1}{k} \cdot (1/f_B - \Delta T_B)$$

eines Bildes einen Endwert

$$\left( b_2 - \frac{(k-m) \cdot (b_2 - b_1)}{f_Z(1/f_B - \Delta T_B) - 1} \right)$$

und somit am Ende der Abbildung eines Gesamtbildes mit $m=k$ einen Endwert $b_2$ erreicht, bei dem sich eine solche Strahlablenkung in zur Zeilenrichtung senkrechter Richtung ergibt, dass die letzte Bildzeile jedes Gesamtbildes einen über die ganze Zeilenlänge im wesentlichen gleichbleibenden vierten Abstand $B_2$ von einem benachbarten zweiten im wesentlichen in Zeilenrichtung verlaufenden Bildrand des Bildfeldes der Bildröhre (6) hat, dritte steuerbare Stellmittel (24) zur Einstellung des dritten Generators (11) auf einen Wert der dritten Steuergrösse (12), bei dem sich eine solche Strahlfokussierung ergibt, dass der Durchmesser eines von dem fokussierten Strahl im Bereich der Bildmitte des Bildfelder der Bildröhre (6) erzeugten, einen Bildpunkt repräsentierenden Leuchtfleckes bei einer Länge A der im wesentlichen in Zeilenrichtung verlaufenden beiden Bildränder des Bildfeldes der Bildröhre (6) und einer Länge B der im wesentlichen senkrecht zur Zeilenrichtung verlaufenden beiden Bildränder des Bildfeldes der Bildröhre (6) innerhalb eines Durchmesserbereiches liegt, dessen untere Grenze durch den tiefsten und dessen obere Grenze durch den höchsten Wert der beiden Wertebereiche

$$0{,}9 \cdot \frac{A - A_1 - A_2}{f_P(1/f_Z - \Delta T_Z)} \pm 45\%$$

und

$$0{,}9 \cdot \frac{B - B_1 - B_2}{f_Z(1/f_B - \Delta T_B)} \pm 45\%$$

22

bestimmt ist, und Steuermittel (25, 26, 27, 46) zu einer solchen Steuerung der ersten und zweiten Stellmittel (16, 17, 18, 19, 20, 21, 22, 23), dass das Verhältnis $(A - A_1 - A_2)/(B - B_1 - B_2)$ der Länge $(A - A_1 - A_2)$ der im wesentlichen in Zeilenrichtung verlaufenden beiden Bildränder des zur Abbildung benutzten Teiles des Bildfeldes der Bildröhre (6) zur Länge $(B - B_1 - B_2)$ der im wesentlichen senkrecht zur Zeilenrichtung verlaufenden beiden Bildränder des zur Abbildung benutzten Teiles des Bildfeldes der Bildröhre (6) im wesentlichen gleich dem Seitenverhältnis der Länge der im wesentlichen in Zeilenrichtung verlaufenden beiden Seiten zur Länge der im wesentlichen senkrecht zur Zeilenrichtung verlaufenden beiden Seiten des den empfangenen Signalen bzw. der dieselben liefernden Signalquelle zugeordneten Bildformats ist, sowie zu einer solchen Steuerung der dritten Stellmittel (24), dass sich ein Bildpunktdurchmesser innerhalb des genannten Durchmesserbereiches ergibt, wobei die Steuermittel Mittel (46) zur Bereitstellung von Stellgrössen, die in einem vorbestimmten Zusammenhang mit den Signalparametern der empfangenen Signale bzw. den Parametern der diese liefernden Signalquelle stehen und den Stellmitteln (16, 17, 18, 19, 20, 21, 22, 23, 24) zur Steuerung zugeführt werden, sowie Mittel (25, 26, 27) zur Zuführung der Stellgrössen zu den zugeordneten Stellmitteln (16, 17, 18, 19, 20, 21, 22, 23, 24) umfassen.

3. Bildempfangsanlage nach Anspruch 2, dadurch gekennzeichnet, dass die ersten Stellmittel (16, 17, 18, 19) je ein steuerbares Stellorgan (17, 18) zur Einstellung des ersten Generators (7) auf den Anfangswert $a_1$ und auf den Endwert $a_2$ der ersten Steuergrösse (8) und die zweiten Stellmittel (20, 21, 22, 23) je ein steuerbares Stellorgan (21, 22) zur Einstellung des zweiten Generators (9) auf den Anfangswert $b_1$ und auf den Endwert $b_2$ der zweiten Steuergrösse (10) umfassen.

4. Bildempfangsanlage nach Anspruch 2 oder 3, dadurch gekennzeichnet, dass die Mittel zur Bereitstellung von Stellgrössen Speichermittel (46) zur Speicherung von wenigstens einem Teil der den N verschiedenen Signalquellen zugeordneten Stellgrössen und die Mittel zur Zuführung der Stellgrössen zu den zugeordneten Stellmitteln (16, 17, 18, 19, 20, 21, 22, 23, 24) Wahlmittel zur Auswahl der den zu empfangenden Signalen bzw. der diese liefernden Signalquelle zugeordneten Stellgrössen aus den in den Speichermitteln (46) gespeicherten Stellgrössen sowie Mittel (25, 26, 27) zur Zuordnung und Zuleitung der der ausgewählten Signalquelle zugeordneten Stellgrössen von den Speichermitteln (46) zu den einzelnen zugeordneten Stellmitteln (16, 17, 18, 19, 20, 21, 22, 23, 24) umfassen.

5. Bildempfangsanlage nach Anspruch 4, dadurch gekennzeichnet, dass Videoschaltmittel (33) zur Verbindung jedes Monitors (1) der Anlage mit der für denselben ausgewählten Signalquelle und Betätigungsmittel (37) zur Steuerung der Videoschaltmittel (33) vorgesehen sind und die Wahlmittel zur Auswahl der der jeweils ausgewählten Signalquelle zugeordneten Stellgrössen aus den gespeicherten Stellgrössen von den Betätigungsmitteln (37) oder den Videoschaltmitteln (33) gesteuerte Zugriffsmittel zum Zugriff zu den der jeweils ausgewählten Signalquelle zugeordneten, in den Speichermitteln (46) gespeicherten Stellgrössen und zur Übergabe der durch den Zugriff erhaltenen Stellgrössen an die Mittel (25, 26, 27) zur Zuordnung und Zuleitung der Stellgrössen zu den zugeordneten Stellmitteln (16, 17, 18, 19, 20, 21, 22, 23, 24) umfassen.

6. Bildempfangsanlage nach Anspruch 5 mit einer Vielzahl von M Monitoren, dadurch gekennzeichnet, dass jeder Monitor über eine Verbindungsgleitung (36) zur Übertragung der Signale der ausgewählten Signalquelle mit einer örtlich von den Monitoren getrennt angeordneten Zentrale (52) verbunden ist und die Videoschaltmittel in der Zentrale angeordnet sind und einen Videoverteiler (33) mit je einem Eingang (34) für jede der N Signalquellen und je einem Ausgang (35) für jeden der M Monitore sowie steuerbare Schaltmittel zum Anschluss jedes der M Ausgänge (35) an jeweils einen der N Eingänge (34) sowie zur Anschliessbarkeit desselben an jeden der (N−1) anderen Eingänge umfassen und vorzugsweise mindestens an einem Teil der Monitorstandorte mit den Videoschaltmitteln in der Zentrale verbundene Betätigungsmittel (37) zur Auswahl der die zu empfangenden Signale liefernden Signalquelle für mindestens einen, vorzugsweise für jeden Monitor an dem betreffenden Standort sowie zu einer entsprechenden Steuerung der steuerbaren Schaltmittel vorgesehen sind.

7. Bildempfangsanlage nach Anspruch 5 oder 6, dadurch gekennzeichnet, dass die von den N Signalquellen stammenden Signale den Videoschaltmitteln (33) über N voneinander getrennte Kanäle (38) zugeführt werden, von denen jeder für die Signale von jeweils einer der N Signalquellen vorgesehen und mit Signalverarbeitungsmitteln (39) zur Gewinnung der Synchronisationssignale sowie zur Gewinnung der vierten Steuergrössen (29, 30, 31), vorzugsweise von den drei Farben Rot, Grün und Blau zugeordneten drei vierten Steuergrössen (29, 30, 31), für die Strahlintensitätssteuerung aus den den Signalverarbeitungsmitteln (39) zugeführten, von der dem betreffenden Kanal (38) zugeordneten Signalquelle stammenden Signalen versehen ist.

8. Bildempfangsanlage nach Anspruch 6 oder 7, dadurch gekennzeichnet, dass die Speichermittel (46) zur Speicherung der Stellgrössen ebenfalls in der Zentrale (52) angeordnet sind und sämtliche den N verschiedenen Signalquellen zugeordneten Stellgrössen in den Speichermitteln (46) gespeichert sind und in jedem Monitor mit den Speichermitteln (46) in der Zentrale verbundene Mittel (25, 26, 27) zur Zuordnung und Zuleitung der der ausgewählten Signalquelle zugeordneten Stellgrössen zu den einzelnen zugeordneten Stellmitteln (16, 17, 18, 19, 20, 21, 22, 23, 24) vorgesehen sind.

9. Bildempfangsanlage nach einem der Ansprüche 2 bis 8, dadurch gekennzeichnet, dass die Stellmittel (16, 17, 18, 19, 20, 21, 22, 23, 24) sowie die Mittel (46) zur Bereitstellung von Stellgrössen und die Mittel (25, 26, 27) zur Zuführung der Stellgrössen zu den zugeordneten Stellmitteln mindestens zum Teil aus digitalen Schaltungen bzw. Bauteilen aufgebaut sind und dass die Mittel zur Bereitstellung von Stellgrössen digitale Speichermittel (46) zur Speicherung von sämtlichen den N verschiedenen Signalquellen zugeordneten Stellgrössen in digitaler Form, vorzugsweise jeweils zusammen mit einer die Stellmittel, denen die Stellgrösse zuzuführen ist, angebenden Adresse, und die Mittel (25, 26, 27) zur Zuordnung und Zuleitung der Stellgrössen von den Speichermitteln (46) zu den einzelnen zugeordneten Stellmitteln (16, 17, 18, 19, 20, 21, 22, 23, 24) vorzugsweise Adressdecodiermittel (27) und separate Steuerleitungen (26) zwischen denselben und den einzelnen Stellmitteln sowie eine die Adressdecodiermittel (25) mit sämtlichen zugeordneten Stellmitteln (16, 17, 18, 19, 20, 21, 22, 23, 24) verbindende gemeinsame Datenleitung (25) umfassen und dass die Generatoren (7, 9, 11) zur Erzeugung der Steuergrössen (8, 10, 12) digitale Schaltungen sowie Digital-Analog-Wandler zur Verarbeitung der den Stellmitteln zugeführten digitalen Stellgrössen umfassen.

10. Bildempfangsanlage nach einem der Ansprüche 1 bis 9, gekennzeichnet durch Mittel zur Bereitstellung von Stellgrössen, die Mittel zur Ableitung von wenigstens einem Teil der Stellgrössen aus den jeweils empfangenen Signalen umfassen.

11. Bildempfangsanlage nach Anspruch 10, dadurch gekennzeichnet, dass die Mittel zur Ableitung von Stellgrössen aus den jeweils empfangenen Signalen Mittel zur Erkennung der die empfangenen Signale liefernden Signalquelle oder des bei derselben benutzten Datenverarbeitungssystems aus den Signalparametern der empfangenen Signale und/oder anderen besonderen Merkmalen der empfangenen Signale und/oder speziellen für die die empfangenen Signale liefernde Signalquelle bzw. das bei derselben benutzte Datenverarbeitungssystem charakteristische Kombinationen von Signalparametern und/oder anderen besonderen Merkmalen der empfangenen Signale sowie von diesen Erkennungsmitteln gesteuerte Mittel zur Erzeugung mindestens eines Teiles der Stellgrössen, die der die empfangenen Signale liefernden Signalquelle bzw. dem bei derselben benutzten Datenverarbeitungssystem zugeordnet sind, und/oder zur Entnahme mindestens eines Teiles dieser Stellgrössen aus Speichermitteln, in denen für jede der N verschiedenen Signalquellen die betreffenden zugeordneten Stellgrössen gespeichert sind, umfassen.

12. Bildempfangsanlage nach einem der Ansprüche 1 bis 11, gekennzeichnet durch einen gemeinsamen Eingang (42) zum Anschluss eines die Signale der N verschiedenen Signalquellen auf N verschiedenen Kanälen übertragenden Kabels (43) und Mittel (44) zur Trennung der Kanäle voneinander.

13. Bildempfangsanlage nach einem der Ansprüche 2 bis 12, gekennzeichnet durch Stellgrössen für die ersten Stellmittel (16, 17, 18, 19), bei denen sich bei einem dem Mittelwert $\frac{1}{2}(a_1 + a_2)$ aus Anfangs- und Endwert der ersten Steuergrösse entsprechenden Wert der ersten Steuergrösse (8) keine Strahlablenkung in Zeilenrichtung ergibt, und/oder Stellgrössen für die zweiten Stellmittel (20, 21, 22, 23), bei denen sich bei einem dem Mittelwert $\frac{1}{2}(b_1 + b_2)$ aus Anfangs- und Endwert der zweiten Steuergrösse entsprechendem Wert der zweiten Steuergrösse (10) keine Strahlablenkung in zur Zeilenrichtung senkrechter Richtung ergibt.

14. Bildempfangsanlage nach einem der Ansprüche 2 bis 13, gekennzeichnet durch Stellgrössen für die ersten und zweiten Stellmittel (16, 17, 18, 19, 20, 21, 22, 23), bei denen entweder die Abstände $A_1$ und $A_2$ zwischen den senkrecht zur Zeilenrichtung verlaufenden beiden Bildrändern des zur Abbildung benutzten Teiles des Bildfeldes der Bildröhre (6) und den senkrecht zur Zeilenrichtung verlaufenden beiden Bildrändern des Bildfeldes der Bildröhre (6) oder die Abstände $B_1$ und $B_2$ zwischen den in Zeilenrichtung verlaufenden beiden Bildrändern des zur Abbildung benutzten Teiles des Bildfeldes der Bildröhre (6) und den in Zeilenrichtung verlaufenden beiden Bildrändern des Bildfeldes der Bildröhre (6) oder sowohl die Abstände $A_1$ und $A_2$ als auch die Abstände $B_1$ und $B_2$ gleich Null sind.

15. Bildempfangsanlage nach einem der Ansprüche 2 bis 14, gekennzeichnet durch Stellgrössen für die dritten Stellmittel (24), bei denen sich ein bei

$$\frac{A - A_1 - A_2}{f_P(1/f_Z - \Delta T_Z)} \pm 20\%$$

vorzugsweise $\pm$ 10%, oder

$$\frac{B - B_1 - B_2}{f(1f - \Delta T)} \pm 20\%$$

vorzugsweise $\pm$ 10%, liegender Durchmesser eines von dem fokussierten Strahl im Bereich der Bildmitte des Bildfeldes der Bildröhre (6) erzeugten, einen Bildpunkt repräsentierenden Leuchtfleckes ergibt.

**Claims**

1. Picture receiving system for receiving video pictures, which originate from N different signal sources with at least partly different signal parameters from the group of parameters comprising the parameters "repetition frequency $f_B$ of synchronisation signals controlling the frame repetition", "duration $\Delta T_B$ of the time interval between two successive pictures", "repetition frequency $f_Z$ of synchronisation signals controlling the horizontal line change", "duration $\Delta T_Z$ of the time interval between two successive horizontal lines", "repetition frequency $f_P$ of picture element signals controlling the individual picture elements", "duration $\Delta T_P$ of the time interval between two successive picture element signals", "picture notation with respect to the succession of z horizontal lines serving for the representation of a total picture in the form of k pictures respectively composed of the $(k \cdot n + m)$-th horizontal lines of the total picture with $n = 0, 1, 2, \ldots (\frac{z}{k} - 1)$ and $m = 1, 2, \ldots k$ and k a natural number", "picture element notation with respect to the signalling of the picture element intensity in analog or digital form", with at least one monitor, which comprises a picture tube provided with first deflection means for beam deflection in the line direction, second deflection means for beam deflection perpendicular to the line direction, focusing means for focusing the beam and means for controlling the beam intensity, which picture tube has a substantially rectangular or square picture area, a first generator for producing a first controlling quantity for the beam deflection in the line direction, a second generator for producing a second controlling quantity for the beam deflection perpendicular to the line direction, a third generator for producing a third controlling quantity for the beam focusing, amplification means for at least part of the controlling quantities and resetting means controlled by signals for resetting at least one of the two generators serving to produce controlling quantities for the beam deflection and furthermore with signal-processing means for obtaining synchronisation signals and for obtaining at least a fourth controlling quantity for the beam intensity control from the signals supplied to the signal-processing means, originating from one of the N signal sources, characterised in that the monitor (1) can be adjusted to the parameters of the signal source by the signals received or the controlling quantities associated with the signal source supplying them, which controlling quantities are stored at least partly in the picture-receiving system or are fixed in an accessible manner in another form, and for each of the N signal sources at least the controlling quantities which cannot be derived from the signals received are stored in the picture receiving system or are fixed in an accessible manner in another form.

2. Picture receiving system according to Claim 1, characterised by first controllable adjusting means (16, 17, 18, 19) for adjusting the first generator (7) before the first picture element of each horizontal line to an initial value $a_1$ of the first controlling quantity (8), in which a beam deflection in the line direction takes place such that the first picture element of each horizontal line is at a first distance $A_1$, which is substantially the same for the first picture elements of all horizontal lines of each total picture, from an adjacent first picture edge of the picture area of the picture tube (6) substantially perpendicular to the horizontal direction and furthermore for the adjustment of the first generator (7) to an average time increase of the first controlling quantity (8) from its initial value $a_1$ such that the first controlling quantity (8) within the signalling duration $(1/f_Z - \Delta T_Z)$ of a horizontal line reaches an end value $a_2$, in which such a beam deflection in the line direction occurs that the last picture element of each horizontal line is at a

second distance $A_2$, which is substantially the same for the last picture elements of all horizontal lines of each total picture, from an adjacent second picture edge of the picture area of the picture tube (6) substantially perpendicular to the line direction, second controllable adjusting means (20, 21, 22, 23) for adjusting the second generator (9) with each total picture change to an initial value $b_1$ of the second controlling quantity (10), in which a beam deflection in the direction perpendicular to the line direction takes place such that the first horizontal line of each total picture is at a third distance $B_1$, remaining substantially the same over the entire line length, from an adjacent first picture edge of the picture area of the picture tube (6) extending substantially in the line direction and for adjusting the second generator with each of the $(k-1)$ picture changes, which occur in the representation of total pictures in the form of k pictures each composed of the $(k \cdot n + m)$-th lines of the total picture with $k \neq 1$ during the representation of each total picture, to an initial value

$$\left( b_1 + \frac{(m - 1) \cdot (b_2 - b_1)}{f_Z(1/f_B - \Delta T_B) - 1} \right)$$

of the second controlling quantity (10) and furthermore for adjusting the second generator (9) to a step number $\frac{f_Z}{k} \cdot (1/f_B - \Delta T_B - k/f_Z)$ per picture, a step height

$$\frac{k \cdot (b_2 - b_1)}{f_Z(1/f_B - \Delta T_B) - 1}$$

and a step width or duration $1/f_Z$ of a second controlling quantity (10) increasing stepwise at time intervals $T_Z = 1/f_Z$ or to such an average time increase of the second control quantity (10) from its initial value

$$\left( b_1 + \frac{(m - 1) \cdot (b_2 - b_1)}{f_Z(1/f_B - \Delta T_B) - 1} \right)$$

that the second control quantity (10) within the signal duration

$$\frac{1}{k} \cdot (1/f_B - \Delta T_B)$$

of a picture reaches an end value

$$\left( b_2 - \frac{(k - m) \cdot (b_2 - b_1)}{f_Z(1/f_B - \Delta T_B) - 1} \right)$$

and thus at the end of the formation of a total picture with m=k reaches an end value $b_2$ at which a beam deflection in the direction perpendicular to the line direction occurs such that the last horizontal line of each total picture is at a fourth distance $B_2$, remaining substantially the same over the entire line length, from an adjacent second picture edge of the picture area of the picture tube (6), extending substantially in the line direction, third controllable adjusting means (24) for adjusting the third generator (11) to a value of the third controlling quantity (12), in which beam focusing occurs such that the diameter of a light spot produced by the focused beam in the region of the picture centre of the picture area of the picture tube (6), representing a picture element, with a length A of the two picture edges of the picture area of the picture tube (6) extending substantially in the line direction and a length B of the two picture edges of the picture area of the picture tube (6) extending substantially perpendicular to the line direction lies within a diameter range whereof the lower limit is determined by the lowest value and its upper limit is determined by the highest value of the two value ranges

$$0.9 \cdot \frac{A - A_1 - A_2}{f_P(1/f_Z - \Delta T_Z)} \pm 45\% \text{ and}$$

$$0.9 \cdot \frac{B - B_1 - B_2}{f_Z(1/f_B - \Delta T_B)} \pm 45\%$$

and control means (25, 26, 27, 46) for such a control of the first and second adjusting means (16, 17, 18, 19, 20, 21, 22, 23) that the ratio $(A - A_1 - A_2)/(B - B_1 - B_2)$ of the length $(A - A_1 - A_2)$ of the two picture edges of the part of the picture area of the picture tube (6) used for imaging, which picture edges extend substantially in the line direction, with respect to the length $(B - B_1 - B_2)$ of the two picture edges of the part of the picture area of the picture tube (6) used for imaging, which picture edges extend substantially perpendicular to the line direction, is substantially equal to the side ratio of the length of the two sides extending substantially in the line direction to the length of the two sides of the picture format associated with the signals received or with the signal source supplying the latter, which two sides extend substantially perpendicular to the line direction and for such a control of the third adjusting means (24) that a picture element diameter within the said diameter range is produced, whereby the control means comprise means (46) for preparing adjusting quantities, which are in predetermined relationship with the signal parameters of the signals received or the parameters of the signal source supplying them and are supplied to the adjusting means (16, 17, 18, 19, 20, 21, 22, 23, 24) for control and means (25, 26, 27) for supplying the adjusting quantities to the associated adjusting means (16, 17, 18, 19, 20, 21, 22, 23).

3. Picture receiving system according to Claim 2, characterised in that the first adjusting means (16, 17, 18, 19) each have a controllable adjusting member (17, 18) for adjusting the first generator (7) to the initial value $a_1$ and to the end value $a_2$ of the first controlling quantity (8) and the second adjusting means (20, 21, 22, 23) each comprise a controllable adjusting member (21, 22) for adjusting the second generator (9) to the initial value $b_1$ and to the end value $b_2$ of the second controlling quantity (10).

4. Picture receiving system according to Claim 2 or 3, characterised in that the means for preparing adjusting quantities comprise storage means (46) for storing at least part of the adjusting quantities associated with the N different signal sources and the means for supplying the adjusting quantities to the associated adjusting means (16, 17, 18, 19, 20, 21, 22, 23, 24) comprise selection means for selecting the adjusting quantities associated with the signals to be received or the signal source supplying the latter, from the adjusting quantities stored in the storage means (46) and means (25, 26, 27) for allocating and supplying the adjusting quantities associated with the selected signal source from the storage means (46) to the individual, associated adjusting means (16, 17, 18, 19, 20, 21, 22, 23, 24).

5. Picture receiving system according to Claim 4, characterised in that video switching means (33) for connecting each monitor (1) of the system to the signal source selected for the same and actuating means (37) for controlling the video switching means (33) are provided and the selection means for selecting the adjusting quantities associated with the respectively selected signal source from the stored adjusting quantities comprise access means controlled by the actuating means (37) or the video switching means (33) for access to the adjusting quantities associated with the respectively selected signal source and stored in the storage means (46) and for transfer of the adjusting quantities obtained by the access to the means (25, 26, 27) for the allocation and supply of the adjusting quantities to the associated adjusting means (16, 17, 18, 19, 20, 21, 22, 23, 24).

6. Picture receiving system according to Claim 5 with a plurality of M monitors, characterised in that each monitor is connected by way of a connecting lead (36) for transmitting the signals of the selected signal source to a central station (52) arranged in a separate location from the monitors and the video-switching means are arranged in the central station and comprise a video distributor (33) with an input (34) respectively for each of the N signal sources and an output (35) respectively for each of the M monitors and controllable switching means for the connection of each of the M outputs (35) respectively to one of the N inputs (34) and for the suitability for connection of the same to each of the (N−1) other inputs and preferably at least at one part of the monitor locations, actuating means (37) connected to the video-switching means in the central station are provided for selecting the signal source supplying the signals to be received, for at least one, preferably for each monitor at the respective location and for a corresponding control of the controllable switching means.

7. Picture receiving system according to Claim 5 or 6, characterised in that the signals originating from the N signal sources are supplied to the video-switching means (33) by way of N separate channels (38), of which each is provided for the signals of one of the N signal sources respectively and is provided with signal-processing means (39) for obtaining the synchronisation signals and for obtaining the fourth controlling quantities (29, 30, 31), preferably of the three fourth control variables (29, 30, 31) associated with the three colours red, green and blue, for the beam intensity control from the signals supplied to the signal-processing means (39) and originating from the signal source associated with the respective channel (38).

8. Picture receiving system according to Claim 6 or 7, characterised in that the storage means (46) for storing the adjusting quantities are likewise located in the central station (52) and all the adjusting quantities associated with the N different signal sources are stored in the storage means (46) and in each monitor means (25, 26, 27) connected to the storage means (46) in the central station are provided for the allocation and supply of the adjusting quantities associated with the selected signal source to the individual associated adjusting means (16, 17, 18, 19, 20, 21, 22, 23, 24).

9. Picture receiving system according to one of Claims 2 to 8, characterised in that the adjusting means (16, 17, 18, 29, 20, 21, 22, 23, 24) and the means (46) for preparing adjusting variables and the means (25, 26, 27) for supplying the adjusting variables to the associated adjusting means are composed at least partly of digital circuits or components and that the means for preparing adjusting quantities comprise digital storage means (46) for storing all the adjusting quantities associated with the N different signal sources in digital form, preferably respectively together with an address indicating the adjusting means, to which the adjusting quantity is to be supplied and the means (25, 26, 27) for allocating and supplying the adjusting quantities from the storage means (46) to the individual associated adjusting means (16, 17, 18, 19, 20, 21, 22, 23, 24) preferably comprise address-decoding means (27) and separate control leads (26) between the latter and the individual adjusting means and comprise a common data lead (25) connecting the address-decoding means (25) to all the associated adjusting means (16, 17, 18, 19, 20, 21, 22, 23, 24) and that the generators (7, 9, 11) for producing the controlling quantities (8, 10, 12) comprise digital circuits and digital-to-analog converters for processing the digital adjusting quantities supplied to the adjusting means.

10. Picture receiving system according to one of Claims 1 to 9, characterised by means for preparing adjusting quantities, which comprise means for deriving at least part of the adjusting quantities from the signals respectively received.

11. Picture receiving system according to Claim 10, characterised in that the means for deriving adjusting quantities from the signals respectively received comprise means for recognising the signal source supplying the signals received of the data-processing system used in the latter, from the signal parameters of the signals received and/or other particular features of the signals received and/or special combinations of signal parameters characteristic of the signal source supplying the signals received or the data-processing system used in the latter and/or other particular features of the signals received and means controlled by these recognition means for producing at least part of the adjusting quantities, which are associated with the signal source supplying the signals received or with the data-processing system used in the latter and/or for removing at least part of these adjusting quantities from storage means, in which the respective associated adjusting quantities for each of the N different signal sources are stored.

12. Picture receiving system according to one of Claims 1 to 11, characterised by a common input (42) for the connection of a cable (43) transmitting the signals of N different signal sources to N different channels and means (44) for separating the channels from each other.

13. Picture receiving system according to one of Claims 2 to 12, characterised by adjusting quantities for the first adjusting means (16, 17, 18, 19), in which no beam deflection occurs in the line direction with a value of the first control quantity (8) corresponding to the average value $\frac{1}{2}(a_1 + a_2)$ of the initial value and end value of the first control quantity, and/or adjusting quantities for the second adjusting means (20, 21, 22, 23), in which no beam deflection in the direction perpendicular to the line direction occurs with a value of the second control quantity (10) corresponding to the average value $\frac{1}{2}(b_1 + b_2)$ of the initial value and end value of the second control quantity.

14. Picture receiving system according to one of Claims 2 to 13, characterised by adjusting quantities for the first and second adjusting means (16, 17, 18, 19, 20, 21, 22, 23), in which either the distances $A_1$ and $A_2$ between the two picture edges of the part of the picture area of the picture tube (6) used for imaging and extending perpendicular to the line direction or the distances $B_1$ and $B_2$ between the two picture edges of the part of the picture area of the picture tube (6) used for imaging and extending in the line direction and the two picture edges of the picture area of the picture tube (6) extending in the line direction or both the distances $A_1$ and $A_2$ as well as the distances $B_1$ and $B_2$ are equal to zero.

15. Picture receiving system according to one of Claims 2 to 14, characterised by adjusting quantities for the third adjusting means (24), in which a diameter of a light spot representing a picture element and produced by the focused beam in the region of the picture centre of the picture area of the picture tube (6) lying at

$$\frac{A - A_1 - A_2}{f_P(1/f_z - \Delta T_z)} \pm 20\%,$$

preferably $\pm$ 10%, or

$$\frac{B - B_1 - B_2}{f(1/f - \Delta T)} \pm 20\%,$$

preferably $\pm$ 10%, results.

## Revendications

1. Installation de réception d'images pour la réception d'images vidéo qui proviennent de N sources de signaux différentes avec des paramètres de signaux au moins partiellement différents provenant du groupe de paramètres comportant les paramètres «fréquence de répétition $f_B$ des signaux de synchronisation commandant le changement d'image», «durée $\Delta T_B$ de l'intervalle de temps entre deux images successives», «fréquence de répétition $f_Z$ des signaux de synchronisation commandant le changement d'image», «durée $\Delta T_Z$ de l'intervalle de temps entre deux lignes d'images successives», «fréquence de répétition $f_P$ des signaux de point d'image commandant les différents points d'image», «durée $\Delta T_P$ de l'intervalle de temps entre deux signaux de points d'image successifs», «façon de représenter l'image en fonction de la succession des z lignes d'images servant à la représentation d'une image globale sous forme de k des $(k \cdot n+m)^{\text{ièmes}}$ lignes d'images de l'image globale avec $n = 0, 1, 2, \ldots (\frac{z}{k} - 1)$ et $m = 1, 2, \ldots k$ et k un nombre naturel d'images composées», «façon de représenter les points d'image en fonction de l'indication de l'intensité des points d'image sous forme analogique ou numérique», avec au moins un moniteur qui comprend un tube-image muni de premiers moyens déflecteurs pour la déflexion du faisceau dans la direction des lignes, de seconds moyens déflecteurs pour la déflexion du faisceau perpendiculairement à la direction des lignes, de moyens de focalisation pour la focalisation du faisceau et de moyens pour la commande de l'intensité du faisceau avec un champ d'image essentiellement rectangulaire ou carré, un premier générateur pour la production d'une première grandeur de commande pour la déflexion du faisceau dans la direction des lignes, un deuxième générateur pour la production d'une deuxième grandeur de commande pour la déflexion du faisceau perpendiculairement à la direction des lignes, un troisième générateur pour la production d'une troisième grandeur de commande pour la focalisation du faisceau, des moyens amplificateurs pour au moins une partie des grandeurs de commande ainsi que des moyens de remise à zéro commandés par des signaux pour la remise à zéro d'au moins l'un des deux générateurs servant à la production de grandeurs de commande pour la déflexion du faisceau, et en outre avec des moyens de traitement des signaux pour l'obtention de signaux de synchronisation ainsi que pour l'obtention d'au moins une quatrième grandeur de commande pour la commande de l'intensité du faisceau des signaux provenant de l'une des N sources de signaux et envoyés aux moyens de traitement des signaux, caractérisée en ce que le moniteur (1) peut être réglé sur les paramètres de la source de signaux par les signaux reçus ou par les grandeurs de réglage associées à la source de signaux délivrant ceux-ci, grandeurs de réglage qui sont au moins en partie mémorisées dans l'installation de réception d'images ou qui sont fixées de façon accessible sous une autre forme, et en ce que pour chacune des N sources de signaux au moins les grandeurs de réglage qui ne sont pas dérivables des signaux reçus sont mémorisées dans l'installation de réception d'images ou sont fixées sous une autre forme de façon accessible.

2. Installation de réception d'images selon la revendication 1, caractérisée par des premiers moyens de réglage commandables (16, 17, 18, 19) pour le réglage du premier générateur (7) devant le premier point d'image de chaque ligne d'images sur une valeur de début $a_1$ de la première grandeur de commande (8), pour laquelle il apparaît une telle déflexion du faisceau dans la direction des lignes que le premier point d'image de chaque ligne d'images comporte une première distance $A_1$ sensiblement identique pour les premiers points d'image de toutes les lignes d'images de chaque image totale d'un premier bord d'image voisin, sensiblement perpendiculaire à la direction des lignes, du champ d'image du tube-image (6), et en outre pour le réglage du premier générateur (7) sur une telle montée temporelle moyenne de la première grandeur de commande (8) depuis sa valeur de début $a_1$, que la première grandeur de commande (8) atteint une valeur terminale $a_2$ à l'intérieur de la durée de signalisation $(1/f_Z - \Delta T_Z)$ d'une ligne d'images, pour laquelle une telle déflexion du faisceau a lieu dans la direction des lignes, que le dernier point d'image de chaque ligne d'images comporte une deuxième distance $A_2$ sensiblement identique pour les derniers points d'image de toutes les lignes d'images de chaque image globale depuis un deuxième bord d'image voisin, sensiblement perpendiculaire à la direction des lignes, du champ d'image du tube-image 6, par des seconds moyens de réglage commandables (20, 21, 22, 23) pour le réglage du deuxième générateur (9) avec chaque changement d'image globale sur une valeur de début $b_1$ de la deuxième grandeur de commande (10), pour laquelle une telle déflexion du faisceau apparaît en direction perpendiculaire à la direction des lignes, que la première ligne d'images de chaque image globale comporte une troisième distance $B_1$ sensiblement constante sur toute la longueur des lignes depuis un premier bord d'image voisin, s'étendant sensiblement dans la direction des lignes, du champ d'image du tube-image (6), ainsi que pour le réglage du deuxième générateur avec chacun des $(k-1)$ changements d'image, qui surviennent lors de la représentation d'images globales chaque fois sous forme de k des $(k \cdot n+m)^{\text{ièmes}}$ lignes de l'image globale pour $k \neq 1$ au cours de la représentation de chaque image globale, sur une valeur de début

$$\left( b_1 + \frac{(m - 1) \cdot (b_2 - b_1)}{f_Z(1/f_B - \Delta T_B) - 1} \right)$$

de la troisième grandeur de commande (10), et en outre pour le réglage du deuxième générateur (9) sur un nombre de degrés $\frac{f_Z}{k} \cdot (1/f_B - \Delta T_B - k/f_Z)$ par image, une hauteur de degré

$$\frac{k \cdot (b_2 - b_1)}{f_Z(1/f_B - \Delta T_B) - 1}$$

et une largeur ou une durée de degré $1/f_Z$ d'une deuxième grandeur de commande (10) croissant par degrés dans les intervalles de temps $T_z = 1/f_z$ ou sur une montée temporelle moyenne de la deuxième grandeur de commande (10) depuis sa valeur de début

$$\left(b_1 + \frac{(m-1)\cdot(b_2-b_1)}{f_z(1/f_B - \Delta T_B) - 1}\right)$$

telle que la deuxième grandeur de commande (10) atteint à l'intérieur de la durée de signalisation $\frac{1}{k}(1/f_B - \Delta T_B)$ d'une image une valeur terminale

$$\left(b_2 - \frac{(k-m)\cdot(b_2-b_1)}{f_z(1/f_B - \Delta T_B) - 1}\right)$$

et donc à la fin de la représentation d'une image globale avec m=k une valeur terminale $b_2$, pour laquelle une telle déflexion du faisceau survient en direction perpendiculaire à la direction des lignes, que la dernière ligne d'image de chaque image globale présente une quatrième distance $B_2$ sensiblement constante sur toute la longueur des lignes depuis un deuxième bord d'image voisin s'étendant sensiblement suivant la direction des lignes du champ d'image du tube-image (6), par des troisièmes moyens de réglage commandables (24) pour le réglage du troisième générateur (11) sur une valeur de la troisième grandeur de commande (12) pour laquelle une telle focalisation du faisceau survient que le diamètre d'un spot produit par le faisceau focalisé dans le domaine du milieu de l'image du champ d'image du tube-image (6) et représentant un point d'image se situe, pour une longueur A des deux bords d'image s'étendant sensiblement dans la direction des lignes du champ d'image du tube-image (6) et une longueur B des deux bords d'image s'étendant sensiblement perpendiculairement à la direction des lignes du champ d'image du tube-image (6), à l'intérieur d'un domaine de diamètre dont la limite inférieure et dont la limite supérieure sont déterminées respectivement par la valeur la plus basse et la plus élevée des deux domaines de valeurs

$$0,9\cdot\frac{A - A_1 - A_2}{f_P(1/f_z - \Delta T_z)} \pm 45\%$$

$$\text{et } 0,9\cdot\frac{B - B_1 - B_2}{f_z(1/f_B - \Delta T_B)} \pm 45\%,$$

et par des moyens de commande (25, 26, 27, 46) pour une commande des premiers et seconds moyens de réglage (16, 17, 18, 19, 20, 21, 22, 23) telle que le rapport $(A - A_1 - A_2)/(B - B_1 - B_2)$ de la longueur $(A - A_1 - A_2)$ des deux bords d'image s'étendant sensiblement dans la direction des lignes de la partie du champ d'image du tube-image (6) utilisée pour la représentation, à la longueur $(B - B_1 - B_2)$ des deux bords d'image s'étendant sensiblement perpendiculairement à la direction des lignes de la partie du champ d'image du tube-image (6) utilisée pour la représentation, est sensiblement égal au rapport des côtés de la longueur des deux côtés s'étendant sensiblement dans la direction des lignes à la longueur des deux côtés s'étendant sensiblement perpendiculairement à la direction des lignes du format d'image associé aux signaux reçus ou à la source de signaux délivrant ceux-ci, ainsi que pour une commande du troisième moyen de réglage (24) telle qu'il s'ensuit un diamètre de point d'image à l'intérieur du domaine cité de diamètres, les moyens de commande englobant des moyens (46) pour la mise à disposition de grandeurs de réglage, qui se trouvent dans un rapport prédéterminé avec les paramètres de signaux des signaux reçus ou avec les paramètres de la source de signaux délivrant ceux-ci et qui sont envoyées aux moyens de réglage (16, 17, 18, 19, 20, 21, 22, 23, 24) pour la commande, ainsi que par des moyens (25, 26, 27) pour l'envoi des grandeurs de réglage aux moyens de réglage associés (16, 17, 18, 19, 20, 21, 22, 23, 24).

3. Installation de réception d'images selon la revendication 2, caractérisée en ce que les premiers moyens de réglage (16, 17, 18, 19) comportent chacun un organe de réglage commandable (17, 18) pour le réglage du premier générateur (7) sur la valeur de départ $a_1$ et sur la valeur terminale $a_2$ de la première grandeur de commande (8) et en ce que les seconds moyens de réglage (20, 21, 22, 23) comportent chacun un organe de réglage commandable (21, 22) pour le réglage du deuxième générateur (9) sur la valeur de début $b_1$ et sur la valeur terminale $b_2$ de la deuxième grandeur de commande (10).

4. Installation de réception d'images selon l'une des revendications 2 ou 3, caractérisée en ce que les moyens pour la mise à disposition de grandeurs de réglage comportent un moyen de mémorisation (46) pour la mémorisation d'au moins une partie des grandeurs de réglage associées aux N sources de signaux différentes et en ce que les moyens pour l'envoi des grandeurs de réglage aux moyens de réglage associés (16, 17, 18, 19, 20, 21, 22, 23, 24) comportent des moyens de choix pour le choix des grandeurs de réglage associées aux signaux à recevoir ou à la source de signaux devant délivrer ceux-ci, parmi les grandeurs de réglage mémorisées dans les moyens de mémorisation (46) ainsi que des moyens (25, 26, 27) pour l'association et l'envoi des grandeurs de réglage associées à la source de signaux choisie depuis les moyens de mémorisation (46) jusqu'aux différents moyens de positionnement associés (16, 17, 18, 19, 20, 21, 22, 23, 24).

5. Installation de réception d'images selon la revendication 4, caractérisée en ce que sont prévus des moyens de commutation vidéo (33) pour la liaison de chaque moniteur (1) de l'installation avec la source de signaux choisie pour celui-ci et des moyens d'actionnement (37) pour la commande des moyens de commutation vidéo (33) et en ce que les moyens de choix pour le choix des grandeurs de réglage associées à la source de signaux choisie chaque fois parmi les grandeurs de réglage mémorisées comportent des moyens d'accès commandés par les moyens d'actionnement (37) ou par les moyens de commutation vidéo (33) pour l'accès aux grandeurs de réglage associées chaque fois à la source de signaux choisie et mémorisées dans les moyens de mémorisation (46) et pour le transfert des grandeurs de réglage obtenues par l'accès, aux moyens (25, 26, 27) pour l'association et l'envoi des grandeurs de réglage aux moyens de réglage associés (16, 17, 18, 19, 20, 21, 22, 23, 24).

6. Installation de réception d'images selon la revendication 5 avec une pluralité de M moniteurs, caractérisée en ce que chaque moniteur est relié par l'intermédiaire d'une conduite de liaison (36) pour la transmission des signaux de la source de signaux choisie avec une centrale (52) disposée séparément des moniteurs et en ce que les moyens de commutation vidéo sont disposés dans la centrale et comportent un répartiteur vidéo (33) avec chaque fois une entrée (34) pour chacune des N sources de signaux et chaque fois une sortie (35) pour chacun des M moniteurs ainsi que des moyens de commutation commandables pour le raccordement de chacune des M sorties (35) à chaque fois l'une des N entrées (34) ainsi que pour la possibilité de raccordement de celui-ci à chacune des (N−1) autres entrées et en ce que sont prévus des moyens d'actionnement (37) reliés de préférence au moins à une partie des emplacements de moniteur avec les moyens de commutation vidéo dans la centrale pour le choix de la source de signaux devant délivrer les signaux à recevoir pour au moins un, de préférence pour chaque moniteur à l'emplacement concerné ainsi que pour une commande correspondante des moyens de commutation commandables.

7. Installation de réception d'images selon l'une des revendications 5 ou 6, caractérisée en ce que les signaux provenant des N sources de signaux sont envoyés aux moyens de commutation vidéo (33) par l'intermédiaire de N canaux (38) séparés les uns des autres, desquels chacun est prévu pour les signaux d'une des N sources de signaux et est équipé de moyens de traitement des signaux (39) pour l'obtention des signaux de synchronisation ainsi que pour l'obtention des quatrièmes grandeurs de commande (29, 30, 31), de préférence de trois quatrièmes grandeurs de commande (29, 30, 31) associées aux trois couleurs rouge, vert et bleu, pour la commande de l'intensité du faisceau provenant des signaux envoyés aux moyens de traitement des signaux (39) et provenant de la source de signaux associée au canal concerné (38).

8. Installation de réception d'images selon l'une des revendications 6 ou 7, caractérisée en ce que les moyens de mémorisation (46) pour la mémorisation des grandeurs de réglage sont disposés également dans la centrale (52) et en ce que la totalité des grandeurs de réglage associées aux N sources de signaux différentes sont mémorisées dans les moyens de mémorisation (46) et en ce que dans chaque moniteur sont prévus des moyens (25, 26, 27) reliés aux moyens de mémorisation (46) dans la centrale pour l'association et l'envoi des grandeurs de réglage associées à la source de signaux choisie aux différents moyens de réglage associés (16, 17, 18, 19, 20, 21, 22, 23, 24).

9. Installation de réception d'images selon l'une des revendications 2 à 8, caractérisée en ce que les moyens de réglage (16, 17, 18, 19, 20, 21, 22, 23, 24) ainsi que les moyens (46) pour la mise à disposition de grandeurs de réglage et en ce que les moyens (25, 26, 27) pour l'envoi des grandeurs de réglage aux moyens de réglage associés sont construits au moins en partie sur la base de branchements ou d'éléments numériques et en ce que les moyens pour la mise à disposition de grandeurs de réglage comportent des moyens de mémorisation numériques (46) pour la mémorisation de la totalité des grandeurs de réglage associées aux N sources de signaux différentes sous forme numérique, de préférence chaque fois avec une adresse indiquant les moyens de réglage auxquels la grandeur de réglage doit être envoyée, et en ce que les moyens (25, 26, 27) pour l'association et l'envoi des grandeurs de réglage depuis les moyens de mémorisation (46) aux différents moyens de réglage associés (16, 17, 18, 19, 20, 21, 22, 23, 24) comportent de préférence des moyens de décodage d'adresse (27) et des conduites de commande séparées (26) entre ceux-ci et les différents moyens de réglage ainsi qu'une conduite de données (25) commune reliant les moyens de décodage d'adresse (25) à l'ensemble des moyens de réglage associés (16, 17, 18, 19, 20, 21, 22, 23, 24) et en ce que les générateurs (7, 9, 11) pour la production des grandeurs de commande (8, 10, 12) comportent des branchements numériques ainsi que des convertisseurs numériques-analogiques pour le traigtement des grandeurs de réglage numériques envoyées aux moyens de réglage.

10. Installation de réception d'images selon l'une des revendications 1 à 9, caractérisée par des moyens pour la mise à disposition de grandeurs de réglage, qui comportent des moyens pour la dérivation d'au moins une partie des grandeurs de réglage de chacun des signaux reçus.

11. Installation de réception d'images selon la revendication 10, caractérisée en ce que les moyens pour la dérivation de grandeurs de réglage des signaux reçus à chaque fois comportent des moyens pour reconnaître la source de signaux délivrant les signaux reçus ou le système de traitement des données utilisé pour celle-ci à partir des paramètres de signaux des signaux reçus et/ou d'autres caractéristiques particulières des signaux reçus et/ou de combinaisons caractéristiques spéciales pour la source de signaux délivrant les signaux reçus ou pour le système de traitement des données utilisé pour celle-ci et/ou d'autres caractéristiques particulières des signaux reçus ainsi que des moyens commandés par ces moyens de reconnaissance pour la production d'au moins une partie des grandeurs de réglage, qui sont associées à la source de signaux délivrant les signaux reçus ou au système de traitement des données utilisé pour celle-ci, et/ou pour le prélèvement d'au moins une partie de ces grandeurs de réglage à partir de moyens de mémorisation, dans lesquels sont mémorisées les grandeurs de réglage associées correspondantes pour chacune des N sources de signaux différentes.

12. Installation de réception d'images selon l'une des revendications 1 à 11, caractérisée par une entrée commune (42) pour le raccordement d'un câble (43) transmettant les signaux des N sources de signaux différentes sur N canaux différents et par des moyens (44) pour la séparation des canaux les uns des autres.

13. Installation de réception d'images selon l'une des revendications 2 à 12, caractérisée par des grandeurs de réglage pour les premiers moyens de réglage (16, 17, 18, 19), pour lesquelles il ne se produit aucune déflexion du faisceau en direction des lignes pour une valeur de la première grandeur de commande (8) correspondant à la valeur moyenne $\frac{1}{2}(a_1 + a_2)$ entre la valeur initiale et la valeur finale de la première grandeur de commande, et/ou par des grandeurs de réglage pour les deuxièmes moyens de réglage (20, 21, 22, 23) pour lesquelles il ne se produit aucune déflexion du faisceau dans une direction perpendiculaire à la direction des lignes pour une valeur de la deuxième grandeur de commande (10) correspondant à la valeur moyenne $\frac{1}{2}(b_1 + b_2)$ entre la valeur initiale et la valeur finale de la deuxième grandeur de commande.

14. Installation de réception d'images selon l'une des revendications 2 à 13, caractérisée par des grandeurs de réglage pour les premiers et seconds moyens de réglage (16, 17, 18, 19, 20, 21, 22, 23), pour lesquelles soit les distances $A_1$ et $A_2$ entre les deux bords d'image s'étendant perpendiculairement à la direction des lignes, de la partie utilisée pour la représentation du champ d'image du tube-image (6), et les deux bords d'image s'étendant perpendiculairement à la direction des lignes, du champ d'image du tube-image (6), ou les distances $B_1$ et $B_2$ entre les deux bords d'image s'étendant dans la direction des lignes, de la partie utilisée pour la représentation, du champ d'image du tube-image (6) et les deux bords d'image s'étendant dans la direction des lignes du champ d'image du tube-image (6) ou bien les distances $A_1$ et $A_2$ de même qu'également les distances $B_1$ et $B_2$ sont égales à zéro.

15. Installation de réception d'images selon l'une des revendications 2 à 14, caractérisée par des grandeurs de réglage pour les troisièmes moyens de réglage (24) pour lesquelles il apparaît un diamètre se situant à

$$\frac{A - A_1 - A_2}{f_P(1/f_z - \Delta T_z)} \pm 20\%$$

de préférence $\pm$ 10%, ou

$$\frac{B - B_1 - B_2}{f(1/f - \Delta T)} \pm 20\%,$$

de préférence $\pm$ 10%, d'un spot produit par le faisceau focalisé dans le domaine du milieu de l'image du champ d'image du tube-image (6), et représentant un point d'image.

Fig. 1

EP 0 239 661 B1

Fig. 2

Fig. 4

35

Fig. 3